# EUROPÄISCHE PATENTANMELDUNG

(11) **EP 4 517 619 A1**
(43) Veröffentlichungstag der Anmeldung: **05.03.2025**
(21) Anmeldenummer: 24196614.2
(22) Anmeldetag: 27.08.2024
(51) Int. Cl.: G06Q 10/0836, G07C 9/00

(54) **BIOMETRISCHE INFORMATION ZUR ABHOLUNG EINER SENDUNG**

(30) Priorität: 28.08.2023 DE 102023123067
(71) Anmelder: Deutsche Post AG, 53113 Bonn (DE)
(72) Erfinder: HORMANN, Ralf, 53229 Bonn (DE); BOSSEK, Martin, 50321 Brühl (DE); BECKEDORFF, Lukas, 53123 Bonn (DE)
(74) Vertreter: Cohausz & Florack

(57) **Zusammenfassung**

Es wird unter anderem ein Verfahren offenbart, wobei das Verfahren umfasst:
- Erhalten einer Berechtigungsinformation, wobei die Berechtigungsinformation zur Abholung einer Sendung aus einer Fachanlage berechtigt;
- Erhalten einer biometrischen Information, wobei die biometrische Information zumindest ein biometrisches Merkmal einer Person repräsentiert;
- Bestimmen, zumindest teilweise basierend auf der Berechtigungsinformation und der biometrischen Information, einer Berechtigungsanzeigeinformation, wobei die Berechtigungsanzeigeinformation anzeigt, dass die biometrische Information zur Abholung der Sendung aus der Fachanlage berechtigt; und
- Bereitstellen der Berechtigungsanzeigeinformation und der biometrischen Information.

## Beschreibung

### Technisches Gebiet

Beispielhafte Ausführungsformen der vorliegenden Offenbarung betreffen Verfahren, Vorrichtungen, Systeme und Computerprogramme zur Verwendung einer biometrischen Information bei der Abholung von Sendungen aus einer Fachanlage.

### Hintergrund

Fachanlagen finden beispielsweise in Form von Schließfach- oder Paketfachanlagen vielfältig Anwendung. Ein Beispiel für eine Fachanlage ist eine Paketstation, welche ein Benutzer zum Empfangen oder Versenden von Postsendungen nutzen kann. Möchte ein Empfänger eine in einer Fachanlage eingelagerte Sendung abholen, ist hierzu herkömmlicherweise eine Berechtigungsinformation (z.B. in Form eines Abholcodes) erforderlich. Diese Berechtigungsinformation berechtigt zur Abholung der Sendung und ist beispielsweise vor Ort an der Fachanlage vorzubringen, bevor eine eingelagerte Sendung von der Fachanlage herausgegeben wird (z.B. durch Öffnen eines Fachs der Fachanlage). Ein solches Erfordernis einer Berechtigungsinformation zur Sendungsabholung kann nachteilig sein, da die Berechtigungsinformation bei der Abholung vom Sendungsempfänger zwingend mitgeführt werden muss und zudem die Abholung der Sendung durch eine dritte Person (z.B. welcher der Empfänger die Sendungsabholung übertragen möchte) erschwert wird.

### Zusammenfassung einer beispielhaften Ausführungsform der vorliegenden Offenbarung

Es ergibt sich daher unter anderem die Aufgabe, die Abholung einer Sendung aus einer Fachanlage vorteilhafter und insbesondere flexibler zu gestalten.

Gemäß einem ersten Aspekt der vorliegenden Offenbarung wird ein Verfahren offenbart, das Folgendes umfasst:
- Erhalten einer Berechtigungsinformation, wobei die Berechtigungsinformation zur Abholung einer Sendung aus einer Fachanlage berechtigt;
- Erhalten einer biometrischen Information, wobei die biometrische Information zumindest ein biometrisches Merkmal einer Person repräsentiert;
- Bestimmen, zumindest teilweise basierend auf der Berechtigungsinformation und der biometrischen Information, einer Berechtigungsanzeigeinformation, wobei die Berechtigungsanzeigeinformation anzeigt, dass die biometrische Information zur Abholung der Sendung aus der Fachanlage berechtigt; und
- Bereitstellen der Berechtigungsanzeigeinformation und der biometrischen Information.

Zum Beispiel kann das Verfahren gemäß dem ersten Aspekt zumindest teilweise oder vollständig von einer Benutzervorrichtung (z.B. einem Smartphone) durchgeführt werden.

Eine Berechtigungsinformation berechtigt zum Abholen einer Sendung aus einer Fachanlage, sodass beispielsweise ein Vorbringen der Berechtigungsinformation an der entsprechenden Fachanlage nach einer Überprüfung der Berechtigungsinformation dazu führt, dass ein bestimmtes Fach der Fachanlage geöffnet wird und die Sendung dem Fach zur Abholung entnommen werden kann. Die Berechtigungsinformation kann somit (z.B. nur) zur Abholung einer bestimmten Sendung berechtigen, sodass die Berechtigungsinformation mit der Abholung dieser bestimmten Sendung ihre Gültigkeit verliert und nicht zur Abholung weiterer Sendung aus entsprechenden Fachanlagen berechtigt

Eine Berechtigungsinformation kann vielfältig ausgeprägt sein. Es kann sich beispielsweise um Buchstaben, Zahlen, Symbole, Muster, Bitfolgen o.ä. handeln. Auch eine Kombination der vorgenannten Formate ist möglich. Zum Beispiel kann die Berechtigungsinformation ein optisches Muster (z.B. ein QR- oder ein Barcode) sein oder durch ein optisches Muster repräsentiert werden. Insbesondere kann es sich bei einer Berechtigungsinformation zum Beispiel um ein Kennwort handeln (z.B. ein von einem Benutzer oder einer Vorrichtung, z.B. zufällig, gewähltes Kennwort). Eine Berechtigungsinformation kann außerdem oder stattdessen auch eine Benutzerkennung enthalten, beispielsweise eine Kundennummer, Personalien, einen persönlichen kryptografischen Schlüssel oder eine ähnliche (z.B. einem Benutzer eindeutig zuordenbare) Information. Eine Berechtigungsinformation kann unter anderem grafisch darstellbar, lesbar für Menschen und/oder Maschinen und/oder elektronisch und/oder per Funk übermittelbar sein.

Eine Berechtigungsinformation kann beispielsweise von der Benutzervorrichtung (z.B. einem Smartphone des Benutzers, welcher eine Sendung aus der Fachanlage abholen möchte), an die Steuereinheit der Fachanlage übermittelt werden. Diese Übermittlung kann beispielsweise mittels einer Funkverbindung (z.B. Bluetooth) erfolgen. In einem anderen Beispiel kann die Berechtigungsinformation mittels eines optischen Musters übermittelt werden, wobei das optische Muster auf einem Bildschirm der Benutzervorrichtung angezeigt wird zur Erfassung durch eine Erfassungseinheit der Steuereinheit der Fachanlage. Das optische Muster kann beispielsweise ein QR- oder Barcode sein und die Erfassungseinheit kann beispielsweise ein Scanner zum Scannen entsprechender Muster sein. In einem anderen Beispiel erfolgt die Übermittlung der Berechtigungsinformation mittels Anzeige der Berechtigungsinformation auf einem Bildschirm der Benutzervorrichtung zur visuellen Erfassung durch einen Benutzer der Benutzervorrichtung, welcher die Berechtigungsinformation dann an einer Eingabeeinheit der Steuereinheit der Fachanlage, insbesondere einer Tastatur oder einem berührungsempfindlichen Bildschirm, eingibt Die Berechtigungsinformation kann dabei beispielsweise als alphanumerische Zeichenfolge auf dem Bildschirm der Benutzervorrichtung angezeigt werden.

Anschließend kann ein Bestimmen erfolgen, ob die an der Steuereinheit der Fachanlage erhaltene Berechtigungsinformation zur Abholung einer Sendung berechtigt, sodass die Steuereinheit der Fachanlage gegebenenfalls das Öffnen und Entriegeln des Fachs der Fachanlage bewirkt (z.B. durch Ansteuerung einer entsprechenden Schlosssteuereinheit der Fachanlage).

Die Berechtigungsinformation kann beispielsweise an der Benutzervorrichtung erhalten werden. Darunter soll verstanden werden, dass die Berechtigungsinformation zum Beispiel von einem Backend-Server empfangen wird, oder dass die Berechtigungsinformation mittels einer Bildaufnahmevorrichtung der Benutzervorrichtung erfasst wird. In einem weiteren Beispiel kann die Berechtigungsinformation von der Benutzervorrichtung erzeugt werden.

Unter einem biometrischen Merkmal soll beispielsweise ein Merkmal verstanden werden, welches eine Person eindeutig kennzeichnet. Demnach eignet sich ein solches biometrisches Merkmal einer Person zur Identifizierung und/oder Authentifizierung dieser Person.

Zum Beispiel kann ein biometrisches Merkmal einer Person ein Gesichtsmerkmal dieser Person sein. Bei einem Gesichtsmerkmal kann es sich beispielsweise um eine Augenposition und/oder einen Augenabstand, eine Nasenform und/oder eine Nasenposition, eine Form des Mundes und/oder Lippenkonturen oder eine Gesichtsform (z.B. die Proportionen von Stirn, Wangen und Kinn) handeln. Weitere Beispiele für biometrische Merkmale sind Fingerabdruckmerkmale (z.B. ein Muster von Linien und Wirbeln auf den Fingerspitzen) oder Merkmale der menschlichen Stimme (z.B. eine Tonhöhe, Klangfarbe und Sprechweise).

Ein biometrisches Merkmal kann beispielsweise von der Benutzervorrichtung mittels zumindest eines biometrischen Sensors erfasst werden, wobei der zumindest eine biometrische Sensor Teil der Benutzervorrichtung sein kann.

Eine biometrische Information wird beispielsweise erhalten, indem die biometrische Information basierend auf zumindest einem der zuvor erfassten biometrischen Merkmale bestimmt wird. Dieses Bestimmen kann einen oder mehrere Schritte umfassen, wie beispielsweise eine Verarbeitung des zumindest einen biometrischen Merkmals und/oder ein Codieren der biometrischen Information basierend auf dem zumindest einen biometrischen Merkmal. Unter dem Erhalten einer biometrischen Information soll demnach beispielsweise das Bestimmen der biometrischen Information basierend auf zumindest einem biometrischen Merkmal verstanden werden, wobei das Erhalten zusätzlich das Erfassen des zumindest einen biometrischen Merkmals umfassen kann. In einem Beispiel kann die biometrische Information ein Modell (z.B. ein mathematisches Modell, welches bspw. ein Gesicht einer Person beschreibt) umfassen, wobei das Modell basierend auf zumindest einem zuvor erfassten biometrischen Merkmal (z.B. einem Gesichtsmerkmal einer Person) bestimmt wird. Demnach kann die biometrische Information das zumindest eine biometrische Merkmal oder eine Vielzahl an biometrischen Merkmalen repräsentieren.

Die erhaltene biometrische Information kann demnach als elektronische Information (z.B. als binär codierte, elektronische Daten) verstanden werden, welche zum Beispiel in einem computerlesbaren Format für biometrische Informationen vorliegt (z.B. in einem spezialisierten Format für Gesichtserkennungszwecke wie ISO/IEC 19794-5 oder ANSI INCITS 385).

Eine Berechtigungsanzeigeinformation kann beispielsweise als ein Informationselement (z.B. eine Variable oder ein Attribut als Teil einer Datenstruktur) verstanden werden, welches für eine bestimmte biometrische Information anzeigt, dass diese biometrische Information zur Abholung einer bestimmten Sendung aus einer Fachanlage berechtigt Demnach kann beispielsweise das Vorbringen der biometrischen Information an einer entsprechenden Fachanlage nach einer Überprüfung der biometrischen Information dazu führen, dass ein bestimmtes Fach der Fachanlage geöffnet wird und die Sendung dem Fach zur Abholung entnommen werden kann. Wird eine Berechtigungsanzeigeinformation zum Beispiel basierend auf einer biometrischen Information und einer Berechtigungsinformation bestimmt, so zeigt diese bestimmte Berechtigungsanzeigeinformation an, dass die biometrische Information zur Abholung jener Sendung berechtigt, zu deren Abholung auch die Berechtigungsinformation berechtigt.

Demnach kann die biometrische Information als weitere/zusätzliche/alternative Berechtigungsinformation verstanden werden. In einem Beispiel kann die ursprünglich erhaltene Berechtigungsinformation nach Bestimmen der Berechtigungsanzeigeinformation ihre Gültigkeit verlieren und somit nicht mehr zur Abholung der Sendung verwendet werden. In anderen Beispielen behält die ursprünglich erhaltene Berechtigungsinformation ihre Gültigkeit nach Bestimmen der Berechtigungsanzeigeinformation, sodass wahlweise die Berechtigungsinformation oder die biometrische Information zur Abholung der Sendung verwendet werden kann.

Unter dem Bereitstellen der Berechtigungsanzeigeinformation und der biometrischen Information kann beispielsweise verstanden werden, dass die Benutzervorrichtung die Berechtigungsanzeigeinformation und die biometrische Information an einen Backend-Server überträgt (z.B. über eine Schnittstelle zu einem zellularen Mobilfunksystem, eine DSL-Schnittstelle oder eine Local Area Network (LAN)-Schnittstelle, mittels derer die Benutzervorrichtung über eine Kommunikationsverbindung mit dem Backend-Server kommunizieren kann).

Gemäß einem zweiten Aspekt der vorliegenden Offenbarung wird ein Verfahren offenbart, das Folgendes umfasst:
- Erhalten einer biometrischen Information, wobei die biometrische Information zumindest ein biometrisches Merkmal einer Person repräsentiert;
- Bestimmen, ob die biometrische Information zur Abholung einer Sendung berechtigt; und
- wenn bestimmt wird, dass die biometrische Information zur Abholung einer Sendung berechtigt, Bewirken eines Öffnens eines Fachs einer Fachanlage, in welchem die Sendung eingelagert ist

Zum Beispiel kann das Verfahren gemäß dem zweiten Aspekt zumindest teilweise oder vollständig von einer Steuereinheit einer Fachanlage oder von einem Backend-Server durchgeführt werden.

Falls das Erhalten einer biometrischen Information von einer Steuereinheit einer Fachanlage durchgeführt wird, kann das Erhalten das Erfassen des zumindest einen von der biometrischen Information repräsentierten biometrischen Merkmals mittels eines biometrischen Sensors der Fachanlage umfassen. Dabei kann das biometrische Merkmal wie oben zum Verfahren gemäß dem ersten Aspekt beschrieben erfasst werden. Anschließend kann die biometrische Information wie oben zum Verfahren gemäß dem ersten Aspekt beschrieben an der Steuereinheit der Fachanlage erhalten und dazu beispielsweise basierend auf dem erfassten biometrischen Merkmal bestimmt werden.

Falls das Erhalten einer biometrischen Information von einem Backend-Server durchgeführt wird, kann das Erhalten ein Empfangen der biometrischen Information am Backend-Server von einer Steuereinheit einer Fachanlage umfassen (z.B. über eine Kommunikationsschnittstelle der Steuereinheit, die einen Zugang zum Internet oder zu einem anderen Netz, an das der Backend-Server angeschlossen ist, ermöglicht). In einem solchen Fall wird die biometrische Information beispielsweise vor der Übertragung an den Backend-Server an der Steuereinheit der Fachanlage erhalten, indem beispielsweise das durch die biometrische Information repräsentierte biometrische Merkmal durch zumindest einen biometrischen Sensor der Fachanlage erfasst wird.

Ein Bestimmen, ob die biometrische Information zur Abholung einer Sendung berechtigt, kann beispielsweise ein Ermitteln umfassen, ob eine Berechtigungsanzeigeinformation vorliegt, welche anzeigt, dass die erhaltene biometrische Information zur Abholung einer Sendung berechtigt Bei einer solchen vorliegenden Berechtigungsanzeigeinformation kann es sich zum Beispiel um eine Berechtigungsanzeigeinformation handeln, die zuvor an einer Benutzervorrichtung wie oben für das Verfahren gemäß dem ersten Aspekt beschrieben bestimmt wurde.

Zum Beispiel kann das Bestimmen, ob die erhaltene biometrische Information zur Abholung einer Sendung berechtigt, einen Vergleich der erhaltenen biometrischen Information mit zumindest einer bereits vorliegenden biometrischen Information (z.B. einer Vielzahl von bereits vorliegenden biometrischen Informationen) umfassen. Dabei wird beispielsweise bestimmt, ob die erhaltene biometrische Information mit einer der bereits vorliegenden biometrischen Informationen übereinstimmt. Falls die erhaltene biometrische Information mit einer bereits vorliegenden biometrischen Information übereinstimmt, wird beispielsweise anschließend bestimmt, ob eine Berechtigungsanzeigeinformation vorliegt, welche anzeigt, dass die bereits vorliegende biometrische Information, die mit der erhaltenen biometrischen Information übereinstimmt, zur Abholung einer Sendung berechtigt Falls eine derartige Berechtigungsanzeigeinformation vorliegt, wird beispielsweise bestimmt, dass die erhaltene biometrische Information zur Abholung einer Sendung berechtigt

Zum Beispiel kann die erhaltene biometrische Information mit einer vorliegenden biometrischen Information übereinstimmen, wenn das von der erhaltenen biometrischen Information repräsentierte biometrische Merkmal mit dem von der vorliegenden biometrischen Information repräsentieren biometrischen Merkmal übereinstimmt Eine solche Übereinstimmung kann beispielsweise auch dann gegeben sein, wenn die jeweiligen biometrischen Merkmal innerhalb einer vorgegebenen Toleranz miteinander übereinstimmen.

Falls das Bestimmen, ob die biometrische Information zur Abholung einer Sendung berechtigt, von der Steuereinheit einer Fachanlage durchgeführt wird, kann zum Beispiel die Steuereinheit einen Vergleich der erhaltenen biometrischen Information mit zumindest einer bereits vorliegenden biometrischen Information durchführen, wobei die bereits vorliegende biometrische Information beispielsweise in einem Datenspeicher der Steuereinheit gespeichert sein kann und zwecks des Vergleichs aus diesem Datenspeicher abgerufen wird. In einem anderen Beispiel kann eine bereits vorliegende biometrische Information von der Steuereinheit an einem Backend-Server angefordert werden, woraufhin die angeforderte bereits vorliegende biometrische Information von dem Backend-Server an die Steuereinheit übertragen und an der Steuereinheit mit der erhaltenen biometrischen Information verglichen wird. In einem anderen Beispiel kann das Bestimmen eine Übertragung der erhaltenen biometrischen Information von der Steuereinheit der Fachanlage an den Backend-Server umfassen, wobei der Backend-Server einen Vergleich der übertragenen biometrischen Information mit zumindest einer am Backend-Server bereits vorliegenden biometrischen Information durchgeführt und anschließend ein Ergebnis des Vergleichs an die Steuereinheit zurücksendet An der Steuereinheit kann dann basierend auf dem empfangenen Ergebnis des Vergleichs bestimmt werden, dass die erhaltene biometrische Information zur Abholung einer Sendung berechtigt, wenn das empfangene Ergebnis anzeigt, dass die erhaltene biometrische Information mit einer am Backend-Server bereits vorliegenden biometrischen Information übereinstimmt und außerdem eine Berechtigungsanzeigeinformation vorliegt, welche anzeigt, dass die bereits vorliegende biometrische Information zur Abholung einer Sendung berechtigt

Falls das Bestimmen, ob die biometrische Information zur Abholung einer Sendung berechtigt, von dem Backend-Server durchgeführt wird, kann der Backend-Server einen Vergleich der zuvor von der Steuereinheit der Fachanlage empfangenen biometrischen Information mit zumindest einer am Backend-Server bereits vorliegenden biometrischen Information durchführen und somit ermitteln, ob eine Berechtigungsanzeigeinformation vorliegt, welche anzeigt, dass die erhaltene biometrische Information zur Abholung einer Sendung berechtigt.

Ein Bewirken des Öffnens eines Fachs einer Fachanlage erfolgt dann (z.B. nur dann), wenn bestimmt wird, dass die erhaltene biometrische Information zur Abholung einer Sendung berechtigt Dies ist beispielsweise der Fall, wenn zuvor ermittelt wird, dass eine Berechtigungsanzeigeinformation vorliegt, welche anzeigt, dass die erhaltene biometrische Information zur Abholung einer Sendung berechtigt Wenn zum Beispiel bestimmt wird, dass die erhaltene biometrische Information nicht zur Abholung einer Sendung berechtigt, kann eine Information ausgegeben werden (z.B. über eine Benutzerschnittstelle der Steuereinheit der Fachanlage), welche anzeigt, dass für die Person, von der die erhaltene biometrische Information ein biometrisches Merkmal repräsentiert, keine Sendung zur Abholung in der Fachanlage vorhanden ist

Wenn das Bewirken des Öffnens von der Steuereinheit einer Fachanlage durchgeführt wird, kann das Bewirken des Öffnens beispielsweise das Ansteuern einer entsprechenden Schlosssteuereinheit eines Fachs der Fachanlage, in welchem die betreffende Sendung eingelagert ist, umfassen. Dabei wird Schlosssteuereinheit beispielsweise derart angesteuert, dass sie das Fach der Fachanlage öffnet (z.B. indem ein Schloss des Fachs entriegelt wird).

Wenn das Bewirken des Öffnens von einem Backend-Server durchgeführt wird, kann das Bewirken des Öffnens beispielsweise umfassen, dass der Backend-Server einen Befehl an die Steuereinheit einer Fachanlage sendet, ein bestimmtes Fach dieser Fachanlage zu öffnen. Daraufhin steuert diese Steuereinheit beispielsweise eine entsprechende Schlosssteuereinheit an, sodass das Fach geöffnet wird. Zum Beispiel umfasst das Bewirken des Öffnens in einem solchen Fall, dass der Backend-Server zunächst bestimmt, in welcher Fachanlage die Sendung, für welche die erhaltene biometrische Information zur Abholung berechtigt, eingelagert ist, und anschließend einen Öffnungsbefehl an die Steuereinheit der bestimmten Fachanlage sendet

Zum Beispiel werden nach dem Bewirken des Öffnens die erhaltene biometrische Information sowie die vorliegende biometrische Information und die vorliegende Berechtigungsanzeigeinformation gelöscht.

Gemäß einem dritten Aspekt der vorliegenden Offenbarung wird ein Verfahren offenbart, das Folgendes umfasst:
- Bereitstellen einer Berechtigungsinformation, wobei die Berechtigungsinformation zur Abholung einer Sendung aus einer Fachanlage berechtigt;
- Erhalten einer Berechtigungsanzeigeinformation und einer biometrischen Information, wobei die Berechtigungsanzeigeinformation vor dem Erhalten zumindest teilweise basierend auf der Berechtigungsinformation und der biometrischen Information bestimmt wird, und wobei die Berechtigungsinformation anzeigt, dass die biometrische Information zur Abholung der Sendung aus der Fachanlage berechtigt; und
- Bereitstellen der Berechtigungsanzeigeinformation und der biometrischen Information.

Zum Beispiel kann das Verfahren gemäß dem dritten Aspekt zumindest teilweise oder vollständig von einem Backend-Server durchgeführt werden.

Das Bereitstellen der Berechtigungsinformation soll beispielsweise so verstanden werden, dass der Backend-Server die Berechtigungsinformation einer Person (z.B. dem Empfänger der Sendung, für welche die Berechtigungsinformation zur Abholung berechtigt) zur Verfügung stellt, sodass die Person mittels der Berechtigungsinformation berechtigt ist, die Sendung aus einer Fachanlage abzuholen. Zum Beispiel sendet der Backend-Server die Berechtigungsinformation an eine Benutzervorrichtung der zu berechtigenden Person (z.B. über eine Kommunikationsverbindung zwischen Backend-Server und Benutzervorrichtung). In einem weiteren Beispiel sendet der Backend-Server die Berechtigungsinformation an ein tragbares Zustellergerät (z.B. das Zustellergerät des Zustellers, welcher die betreffende Sendung zuvor in einer Fachanlage eingelagert hat). In einem solchen Fall kann die Berechtigungsinformation beispielsweise in Form eines Barcodes von dem Zustellergerät (z.B. ein Handheldgerät ausgestattet mit einem Scanner und Drucker) ausgedruckt werden, wobei der ausgedruckte Barcode (z.B. auf einer Abholkarte aufgedruckt) zum Beispiel anschließend vom Zusteller in einen Briefkasten der Person eingelegt wird, die Empfänger der Sendung ist, für welche die Berechtigungsinformation zur Abholung berechtigt

Zum Beispiel wird die vom Backend-Server bereitgestellte Berechtigungsinformation an einer Benutzervorrichtung wie zum Verfahren gemäß dem ersten Aspekt beschrieben erhalten. Demnach wird zu einem späteren Zeitpunkt an der Benutzervorrichtung basierend auf der erhaltenen Berechtigungsinformation und einer erhaltenen biometrischen Information eine Berechtigungsanzeigeinformation bestimmt. Diese Berechtigungsanzeigeinformation wird zusammen mit der biometrischen Information zum Beispiel von der Benutzervorrichtung an den Backend-Server zurückübertragen, sodass die Berechtigungsanzeigeinformation und die biometrische Information gemäß dem Verfahren des dritten Aspekts an dem Backend-Server erhalten werden.

### Nach dem Erhalten einer Berechtigungsanzeigeinformation und einer biometrischen Information stellt der Backend-Server zum Beispiel die erhaltene

Berechtigungsanzeigeinformation und die erhaltene biometrische Information bereit Die bereitgestellte Berechtigungsanzeigeinformation und biometrische Information können im weiteren Verlauf als eine vorliegende biometrische Information beziehungsweise als eine vorliegende Berechtigungsanzeigeinformation verstanden werden.

Das Bereitstellen der Berechtigungsanzeigeinformation und der biometrischen Information kann beispielsweise das Abspeichern dieser Informationen in einem Datenspeicher des Backend-Servers umfassen. In einem weiteren Beispiel kann das Bereitstellen der Berechtigungsanzeigeinformation und der biometrischen Information umfassen, dass diese Informationen an die Steuereinheit einer Fachanlage gesendet werden, wobei diese Informationen anschließend in einem Datenspeicher dieser Steuereinheit abgespeichert werden. Hierzu kann der Backend-Server zum Beispiel zunächst bestimmen, in welcher Fachanlage die Sendung, für welche die Berechtigungsanzeigeinformation anzeigt, dass die biometrische Information zur Abholung berechtigt, zuvor eingelagert wurde. Anschließend kann der Backend-Server die beiden Informationen an die Steuereinheit der bestimmten Fachanlage senden. An dieser Fachanlage kann beispielsweise im weiteren Verlauf ein Verfahren gemäß dem zweiten Aspekt ablaufen, im Rahmen dessen die eingelagerte Sendung abholt wird.

Gemäß den oben beschrieben Aspekten der vorliegenden Offenbarung kann vorteilhafterweise ein Benutzer als Sendungsempfänger mittels seiner Benutzervorrichtung (z.B. eines Smartphones) basierend auf einer erhaltenen herkömmlichen Berechtigungsinformation für die Abholung einer Sendung ein oder mehrere biometrische Merkmale seiner Person (z.B. ein Gesichtsmerkmal) erfassen. Daraufhin wird durch die Benutzervorrichtung bestimmt, dass zusätzlich oder alternativ zu der herkömmlichen Berechtigungsinformation eine biometrische Information, die das erfasste biometrische Merkmal repräsentiert, zur Abholung der Sendung berechtigt Der Benutzer kann demnach anschließend an der betreffenden Fachanlage jenes biometrische Merkmal von entsprechenden Sensoren der Fachanlage erfassen lassen, sodass nach einer Überprüfung die entsprechende Sendung herausgegeben wird. Somit ist vorteilhafterweise ein Mitführen und Vorbringen der herkömmlichen Berechtigungsinformation an der Fachanlage für die Herausgabe einer eingelagerten Sendung nicht mehr erforderlich.

Anstatt einer herkömmlichen Berechtigungsinformation genügt vorteilhafterweise das Erfassen eines biometrischen Merkmals zur Abholung einer eingelagerten Sendung, sodass ein Empfänger keine zusätzlichen Informationen oder Nachweise mitführen muss, um die betreffende Sendung abzuholen. Vorteilhafterweise kann die biometrische Information zur Abholung einer bestimmten Sendung berechtigen, sodass sie nach dem Abholen dieser Sendung aus sämtlichen Datenspeichern (z.B. Datenspeichern der Steuereinheit der Fachanlage oder des Backend-Servers) gelöscht werden können. Somit ist vorteilhafterweise sichergestellt, dass die (z.B. sensible) biometrische Information nur temporär bis zum Zeitpunkt der Sendungsabholung abgespeichert wird.

Gemäß jedem der oben beschriebenen Aspekte der vorliegenden Offenbarung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der vorliegenden Offenbarung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung, eingerichtet zur Ausführung und/oder Steuerung des Verfahrens gemäß dem jeweiligen Aspekt der vorliegenden Offenbarung oder umfassend jeweilige Mittel zur Ausführung und/oder Steuerung der Schritte des Verfahrens gemäß dem jeweiligen Aspekt der vorliegenden Offenbarung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der vorliegenden Offenbarung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Weitere Vorteile der beispielhaften Aspekte der vorliegenden Offenbarung werden nachfolgend anhand beispielhafter Ausführungsformen beschrieben, deren Offenbarung für alle Aspekte der vorliegenden Offenbarung gleichermaßen gelten soll.

In einer beispielhaften Ausführungsform des Verfahrens gemäß dem ersten Aspekt wird die Berechtigungsinformation durch einen Abholcode repräsentiert.

Zum Beispiel ist die Berechtigungsinformation durch einen Abholcode gegeben, sodass die Berechtigungsinformation erhalten werden kann, indem der Abholcode erfasst wird. In einem anderen Beispiel wird die Berechtigungsinformation durch mehr als einen Abholcode repräsentiert, indem beispielsweise basierend auf einer an einer Benutzervorrichtung vorliegenden Berechtigungsinformation in bestimmten zeitlichen Abständen wiederholt ein neuer Abholcode erzeugt wird, welcher die Berechtigungsinformation jeweils zeitlich beschränkt repräsentiert, um die Integrität des Abholcodes zu erhöhen.

Unter einem Abholcode kann beispielsweise ein Code verstanden werden, wobei dieser Code bei Vorbringen an einer Fachanlage zur Abholung eingelagerten Sendung berechtigt (z.B. bewirkt das Vorbringen des Abholcodes ein Öffnen eines Fachs, sodass die eingelagerte Sendung entnommen werden kann). Der Abholcode, welcher eine Berechtigungsinformation repräsentiert, kann vielfältig ausgeprägt sein. Ein Abholcode kann beispielsweise Buchstaben, Zahlen und/oder optische Muster (z.B. ein QR-Code oder ein Barcode) umfassen. Ein Abholcode kann beispielsweise an einer Fachanlage vorgebracht werden, indem der zum Beispiel aus Zahlen und/oder Buchstaben bestehende Abholcode von einem Benutzer an einer Eingabeeinheit einer Steuereinheit der Fachanlage (z.B. einer Tastatur oder einem berührungsempfindlichen Bildschirm mit Bildschirmtastatur) manuell eingegeben wird oder der Abholcode mittels einer Funkverbindung (z.B. Bluetooth) von der Benutzervorrichtung an die Steuereinheit der Fachanlage übermittelt wird. In anderen Beispielen, in denen der Abholcode durch ein optisches Muster (z.B. ein QR-Code oder ein Barcode) gegeben ist, kann der Abholcode beispielsweise an der Fachanlage vorgebracht werden, indem eine Steuereinheit der Fachanlage eine Erfassungseinheit wie beispielsweise einen Scanner aufweist, welcher optisch Informationen erfassen kann. Die Erfassungseinheit kann somit beispielsweise den Abholcode in Form eines Barcodes oder eines QR-Codes von einem Bildschirm der Benutzervorrichtung oder von einer Abholkarte erfassen.

In einer beispielhaften Ausführungsform des Verfahrens gemäß dem ersten Aspekt umfasst das Erhalten der Berechtigungsinformation ferner:
- Empfangen der Berechtigungsinformation von einem Backend-Server; oder
- Bewirken eines Erfassens der Berechtigungsinformation mittels einer Bildaufnahmevorrichtung einer Benutzervorrichtung.

Zum Beispiel kann die Berechtigungsinformation an der Benutzervorrichtung von einem Backend-Server empfangen werden (z.B. über eine Schnittstelle zu einem zellularen Mobilfunksystem, eine DSL-Schnittstelle oder eine Local Area Network (LAN)-Schnittstelle, mittels derer die Benutzervorrichtung über eine Kommunikationsverbindung mit dem Backend-Server kommunizieren kann). Beispielsweise sendet der Backend-Server die Berechtigungsinformation an die Benutzervorrichtung, nachdem die Berechtigungsinformation am Backend-Server erzeugt wurde. Zum Beispiel wird der Benutzer der Benutzervorrichtung über eine Benutzerschnittstelle der Benutzervorrichtung nach Empfangen der Berechtigungsinformation darüber informiert, dass eine Berechtigungsinformation vorliegt und diese den Benutzer dazu berechtigt, eine an ihn adressierte Sendung aus einer Fachanlage abzuholen.

In einem anderen Beispiel wird die Berechtigungsinformation an der Benutzervorrichtung mittels einer Bildaufnahmevorrichtung (z.B. einer Kamera) der Benutzervorrichtung erfasst. Dies ist beispielsweise so zu verstehen, dass eine Kamera der Benutzervorrichtung einen in ausgedruckter Form vorliegenden Abholcode (z.B. einen Barcode oder einen QR-Code) erfasst (z.B. abfotografiert), und durch das Erfassen des Abholcodes die durch den Abholcode repräsentierte Berechtigungsinformation erfasst wird. Das Erfassen des Abholcodes kann neben dem Abfotografieren des Abholcodes auch die anschließende Durchführung eines Erkennungsalgorithmus umfassen, wobei der Erkennungsalgorithmus die von dem Abholcode repräsentierte Berechtigungsinformation erkennt. Der Abholcode kann beispielsweise auf einer Abholkarte aufgedruckt sein, wobei die Abholkarte zuvor von einem Zusteller in einen Briefkasten der Person eingelegt wird, die Empfänger der Sendung ist, für welche die Berechtigungsinformation zur Abholung berechtigt In einem solchen Fall kann die Berechtigungsinformation beispielsweise in Form eines Barcodes von einem Zustellergerät des Zustellers (z.B. ein Handheldgerät ausgestattet mit einem Scanner und Drucker) ausgedruckt worden sein, nachdem der Zusteller die Sendung in eine Fachanlage eingelagert hat.

In einer beispielhaften Ausführungsform des Verfahrens gemäß dem ersten Aspekt umfasst das Erhalten der biometrischen Information ferner:
- Bewirken eines Erfassens des zumindest einen von der biometrischen Information repräsentierten biometrischen Merkmals mit einem oder mehreren biometrischen Sensoren der Benutzervorrichtung.

Unter dem Bewirken des Erfassens des zumindest einen biometrischen Merkmals kann beispielsweise verstanden werden, dass die Benutzervorrichtung zumindest einen biometrischen Sensor derart ansteuert, dass der zumindest eine biometrische Sensor daraufhin das zumindest eine biometrische Merkmal erfasst Beispielweise bestimmt die Benutzervorrichtung anschließend die biometrische Information basierend auf dem zumindest einen erfassten biometrischen Merkmal.

Zum Beispiel kann ein biometrischer Sensor durch eine Kamera (welche z.B. einen oder mehrere Bildsensoren umfasst) der Benutzervorrichtung gegeben sein, wobei die Kamera beispielsweise Bilder eines Gesichts aus verschiedenen Winkeln und Distanzen erfasst. Basierend auf den erfassten Bildern können beispielsweise mittels Bildverarbeitung (z.B. einem Bildanalysealgorithmus) ein oder mehrere Gesichtsmerkmale bestimmt werden. Des Weiteren kann eine Kamera (z.B. eine Infrarotkamera) der Benutzervorrichtung beispielsweise eine dreidimensionale Form eines Gesichts erfassen, beispielsweise indem zunächst ein Punktmuster auf das Gesicht projiziert wird und die Kamera anschließend das reflektierte Punktmuster erfasst In einem weiteren Beispiel kann ein biometrischer Sensor durch einen Fingerabdrucksensor der Benutzervorrichtung gegeben sein (welcher z.B. einen oder mehrere Bildsensoren, kapazitive Sensoren, thermische Sensoren und/oder Drucksensoren umfasst). In einem weiteren Beispiel kann ein biometrischer Sensor durch ein Mikrofon der Benutzervorrichtung gegeben sein, wobei das Mikrofon beispielsweise eine gesprochene Stimme erfasst und die erfassten Audiosignale mittels Audioverarbeitung analysiert werden, um charakteristische Stimmmerkmale wie Tonhöhe oder Frequenzmuster zu bestimmen.

In einer beispielhaften Ausführungsform des Verfahrens gemäß dem ersten Aspekt umfasst das Erhalten der biometrischen Information ferner:
- Anfragen der biometrischen Information an einer weiteren Benutzervorrichtung;
- Empfangen der angefragten biometrischen Information von der weiteren Benutzervorrichtung.

In einem Beispiel führt die Benutzervorrichtung, welche in einem vorherigen Schritt eine Berechtigungsinformation erhalten hat, eine Anfrage an eine weitere Benutzervorrichtung durch. Beispielsweise sendet die Benutzervorrichtung hierzu eine Anfragenachricht an die weitere Benutzervorrichtung (z.B. über eine Schnittstelle zu einem zellularen Mobilfunksystem, eine DSL-Schnittstelle, eine Local Area Network (LAN)-Schnittstelle, oder eine weitere Funkschnittstelle wie z.B. WLAN oder Bluetooth, mittels derer die Benutzervorrichtung über eine Kommunikationsverbindung mit der weiteren Benutzervorrichtung kommuniziert). Die gesendete Anfragenachricht zeigt beispielsweise an, dass von der weiteren Benutzervorrichtung eine biometrische Information angefordert wird, wobei die angefragte biometrische Information zumindest ein biometrisches Merkmal einer Person repräsentiert.

Ähnlich wie die Benutzervorrichtung kann auch die weitere Benutzervorrichtung beispielsweise als Smartphone verstanden werden, sie kann allerdings ebenso durch andere Formen von elektronischen Endbenutzergeräten (z.B. Desktop-Computer, Laptop oder Tablet) gegeben sein. Zum Beispiel unterscheidet sich ein Benutzer der weiteren Benutzervorrichtung von dem Benutzer der Benutzervorrichtung.

Zum Beispiel wird der Schritt des Anfragens der biometrischen Information an einer weiteren Benutzervorrichtung durch eine Benutzeraktion an der Benutzervorrichtung ausgelöst, wobei basierend auf der Benutzeraktion beispielsweise die weitere Benutzervorrichtung bestimmt wird. Somit wird die Anfrage an eine weitere Benutzervorrichtung zum Beispiel nur dann ausgelöst, wenn der Benutzer der Vorrichtung diese Anfrage veranlasst hat

Zum Beispiel führt die weitere Benutzervorrichtung in Antwort auf die von der Benutzervorrichtung erhaltene Anfrage ein Erhalten der angefragten biometrischen Information durch. Dieses Erhalten kann das Erfassen zumindest eines biometrischen Merkmals durch einen oder mehrere biometrische Sensoren der weiteren Benutzervorrichtung umfassen, wobei die weitere Benutzervorrichtung beispielsweise die angefragte biometrische Information basierend auf dem zumindest einen erfassten biometrischen Merkmal derart bestimmt, dass die angefragte biometrische Information das durch die weitere Benutzervorrichtung erfasste zumindest eine biometrische Merkmal repräsentiert. Das Erfassen des zumindest einen biometrischen Merkmals durch die weitere Benutzervorrichtung kann beispielsweise wie oben für das Erfassen des zumindest einen biometrischen Merkmals durch die Benutzervorrichtung beschrieben durchgeführt werden.

Nachdem zum Beispiel die weitere Benutzervorrichtung die angefragte biometrische Information bestimmt hat, kann die weitere Benutzervorrichtung die angefragte biometrische Information an die Benutzervorrichtung senden, welche die biometrische Information ursprünglich angefragt hat (z.B. über jene Kommunikationsverbindung, über die zuvor die Anfrage für die biometrische Information an die weitere Benutzervorrichtung gesendet wurde).

Zum Beispiel bestimmt die Benutzervorrichtung, nachdem sie die angeforderte biometrische Information von der weiteren Benutzervorrichtung empfangen hat, nachfolgend zumindest teilweise basierend auf der erhaltenen Berechtigungsinformation und der von der weiteren Benutzervorrichtung empfangenen biometrischen Information die Berechtigungsanzeigeinformation.

Vorteilhafterweise kann durch die Anfrage einer weiteren Benutzervorrichtung eine biometrische Information erhalten werden, die ein biometrisches Merkmal einer dritten Person (d.h. einem Benutzer der weiteren Benutzervorrichtung) repräsentiert Bei dieser dritten Person kann es sich beispielsweise um eine Person handeln, welcher der ursprüngliche Empfänger der eingelagerten Sendung (d.h. ein Benutzer der Benutzervorrichtung) die Abholung der eingelagerten Sendung übertragen möchte. Indem ein biometrisches Merkmal von dieser dritten Person erfasst wird und weiterhin eine Berechtigungsanzeigeinformation bestimmt wird, welche anzeigt, dass eine das biometrische Merkmal der dritten Person repräsentierende biometrische Information zur Abholung der Sendung berechtigt, kann eine dritte Person von dem ursprünglichen Empfänger der herkömmlichen Berechtigungsinformation flexibel zur Abholung der Sendung berechtigt werden. Vorteilhafterweise ist es für die dritte Person nicht erforderlich, die herkömmliche Berechtigungsinformation zu erhalten und bei der Abholung der Sendung an der Fachanlage vorzubringen. Zugleich ist die beschriebene Übertragung der Abholberechtigung sicher gegenüber Betrugsversuchen, da die Übertragung über die Benutzervorrichtung des ursprünglichen Empfängers der herkömmlichen Berechtigungsinformation läuft und somit unter der Kontrolle des ursprünglichen Empfängers steht, welcher entscheiden kann, ob und von welcher weiteren Benutzervorrichtung eine biometrische Information angefragt wird.

In einer beispielhaften Ausführungsform des Verfahren gemäß dem ersten Aspekt umfasst das Bereitstellen der Berechtigungsanzeigeinformation und der biometrischen Information ferner:
- Übertragen der biometrischen Information und der Berechtigungsanzeigeinformation an einen Backend-Server.

Zum Beispiel überträgt die Benutzervorrichtung die Berechtigungsanzeigeinformation und die biometrische Information an einen Backend-Server (z.B. über eine Schnittstelle zu einem zellularen Mobilfunksystem, eine DSL-Schnittstelle oder eine Local Area Network (LAN)-Schnittstelle, mittels derer sie über eine Kommunikationsverbindung mit dem Backend-Server kommunizieren kann). Die an den Backend-Server übertragene Berechtigungsanzeigeinformation und biometrische Information können im weiteren Verlauf als eine vorliegende biometrische Information beziehungsweise als eine vorliegende Berechtigungsanzeigeinformation verstanden werden.

In einer beispielhaften Ausführungsform des Verfahrens gemäß dem zweiten Aspekt umfasst das Erhalten der biometrischen Information ferner:
- Bewirken eines Erfassens des zumindest einen von der biometrischen Information repräsentierten biometrischen Merkmals mit einem oder mehreren biometrischen Sensoren der Fachanlage.

Unter dem Bewirken des Erfassens des zumindest einen biometrischen Merkmals kann beispielsweise verstanden werden, dass die Steuereinheit der Fachanlage zumindest einen biometrischen Sensor der Fachanlage derart ansteuert, dass der zumindest eine biometrische Sensor daraufhin das zumindest eine biometrische Merkmal erfasst Beispielweise bestimmt die Steuereinheit der Fachanlage anschließend die biometrische Information basierend auf dem zumindest einen erfassten biometrischen Merkmal.

In einem anderen Beispiel kann das Bewirken des Erfassens von einem Backend-Server durchgeführt werden, wobei der Backend-Server beispielsweise einen Befehl an die Steuereinheit einer Fachanlage sendet, zumindest ein biometrisches Merkmal zu erfassen. Daraufhin steuert diese Steuereinheit beispielsweise zumindest einen biometrischen Sensor der Fachanlage derart an, dass dieser biometrische Sensor ein biometrisches Merkmal erfasst

Zum Beispiel kann ein biometrischer Sensor durch eine Kamera (welche z.B. einen oder mehrere Bildsensoren umfasst) der Fachanlage gegeben sein, wobei die Kamera beispielsweise Bilder eines Gesichts aus verschiedenen Winkeln und Distanzen erfasst. Basierend auf den erfassten Bildern können beispielsweise mittels Bildverarbeitung (z.B. einem Bildanalysealgorithmus) ein oder mehrere Gesichtsmerkmale bestimmt werden. Des Weiteren kann eine Kamera (z.B. eine Infrarotkamera) der Fachanlage beispielsweise eine dreidimensionale Form eines Gesichts erfassen, beispielsweise indem zunächst ein Punktmuster auf das Gesicht projiziert wird und die Kamera anschließend das reflektierte Punktmuster erfasst. In einem weiteren Beispiel kann ein biometrischer Sensor durch einen Fingerabdrucksensor der Fachanlage gegeben sein (welcher z.B. einen oder mehrere Bildsensoren, kapazitive Sensoren, thermische Sensoren und/oder Drucksensoren umfasst). In einem weiteren Beispiel kann ein biometrischer Sensor durch ein Mikrofon der Fachanlage gegeben sein, wobei das Mikrofon beispielsweise eine gesprochene Stimme erfasst und die erfassten Audiosignale mittels Audioverarbeitung analysiert werden, um charakteristische Stimmmerkmale wie Tonhöhe oder Frequenzmuster zu bestimmen.

In einer beispielhaften Ausführungsform des Verfahrens gemäß dem zweiten Aspekt umfasst das Bestimmen, ob die biometrische Information zur Abholung einer Sendung berechtigt, ferner:
- Ermitteln, ob eine Berechtigungsanzeigeinformation vorliegt, welche anzeigt, dass die erhaltene biometrische Information zur Abholung einer Sendung berechtigt

Zum Beispiel umfasst das Ermitteln, ob eine Berechtigungsanzeigeinformation vorliegt, welche anzeigt, dass die erhaltene biometrische Information zur Abholung einer Sendung berechtigt, einen Vergleich der erhaltenen biometrischen Information mit zumindest einer bereits vorliegenden biometrischen Information (z.B. einer Vielzahl von bereits vorliegenden biometrischen Informationen). Dabei wird beispielsweise bestimmt, ob die erhaltene biometrische Information mit einer der bereits vorliegenden biometrischen Informationen übereinstimmt. Falls die erhaltene biometrische Information mit einer bereits vorliegenden biometrischen Information übereinstimmt, wird beispielsweise anschließend ermittelt, ob eine Berechtigungsanzeigeinformation vorliegt, welche anzeigt, dass die bereits vorliegende biometrische Information, die mit der erhaltenen biometrischen Information übereinstimmt, zur Abholung einer Sendung berechtigt. Falls eine derartige Berechtigungsanzeigeinformation vorliegt, wird beispielsweise bestimmt, dass die erhaltene biometrische Information zur Abholung einer Sendung berechtigt

Zum Beispiel kann die erhaltene biometrische Information mit einer vorliegenden biometrischen Information übereinstimmen, wenn das von der erhaltenen biometrischen Information repräsentierte biometrische Merkmal mit dem von der vorliegenden biometrischen Information repräsentierten biometrischen Merkmal übereinstimmt. Eine solche Übereinstimmung kann beispielsweise auch dann gegeben sein, wenn die jeweiligen biometrischen Merkmale innerhalb einer vorgegebenen Toleranz miteinander übereinstimmen. Eine solche Toleranz kann zum Beispiel deswegen erforderlich sein, weil das von der erhaltenen biometrischen Information repräsentierte biometrische Merkmal von einem biometrischen Sensor einer Fachanlage erfasst wurde und das von der vorliegenden biometrischen Information repräsentierte biometrische Merkmal von einem biometrischen Sensor einer Benutzervorrichtung erfasst wurde, wobei sich die biometrischen Sensoren der Benutzervorrichtung und der Fachanlage beispielsweise unterscheiden und dasselbe biometrische Merkmal einer Person unterschiedlich erfassen.

Falls das Ermitteln, ob eine Berechtigungsanzeigeinformation vorliegt, welche anzeigt, dass die erhaltene biometrische Information zur Abholung einer Sendung berechtigt, von der Steuereinheit einer Fachanlage durchgeführt wird, kann zum Beispiel die Steuereinheit einen Vergleich der erhaltenen biometrischen Information mit zumindest einer bereits vorliegenden biometrischen Information durchführen, wobei die bereits vorliegende biometrische Information beispielsweise in einem Datenspeicher der Steuereinheit gespeichert sein kann und zwecks des Vergleichs aus diesem Datenspeicher abgerufen wird. In einem anderen Beispiel kann eine bereits vorliegende biometrische Information von der Steuereinheit an einem Backend-Server angefordert werden, woraufhin die angeforderte bereits vorliegende biometrische Information von dem Backend-Server an die Steuereinheit übertragen und an der Steuereinheit mit der erhaltenen biometrischen Information verglichen wird. In einem anderen Beispiel kann das Bestimmen eine Übertragung der erhaltenen biometrischen Information von der Steuereinheit der Fachanlage an den Backend-Server umfassen, wobei der Backend-Server einen Vergleich der übertragenen biometrischen Information mit zumindest einer am Backend-Server bereits vorliegenden biometrischen Information durchgeführt und anschließend ein Ergebnis des Vergleichs an die Steuereinheit zurücksendet An der Steuereinheit kann dann basierend auf dem empfangenen Ergebnis des Vergleichs bestimmt werden, dass die erhaltene biometrische Information zur Abholung einer Sendung berechtigt, wenn das empfangene Ergebnis anzeigt, dass die erhaltene biometrische Information mit einer am Backend-Server bereits vorliegenden biometrischen Information übereinstimmt und außerdem eine Berechtigungsanzeigeinformation vorliegt, welche anzeigt, dass die bereits vorliegende biometrische Information zur Abholung einer Sendung berechtigt

Falls das Ermitteln, ob eine Berechtigungsanzeigeinformation vorliegt, welche anzeigt, dass die erhaltene biometrische Information zur Abholung einer Sendung berechtigt, von dem Backend-Server durchgeführt wird, kann der Backend-Server einen Vergleich der zuvor von der Steuereinheit der Fachanlage empfangenen biometrischen Information mit zumindest einer am Backend-Server bereits vorliegenden biometrischen Information durchführen und somit ermitteln, ob eine Berechtigungsanzeigeinformation vorliegt, welche anzeigt, dass die erhaltene biometrische Information zur Abholung einer Sendung berechtigt

In einer beispielhaften Ausführungsform des Verfahrens gemäß dem zweiten Aspekt umfasst das Bewirken des Öffnens des Fachs ferner:
- Bestimmen, zumindest teilweise auf der vorliegenden Berechtigungsanzeigeinformation, des Fachs der Fachanlage, in welchem die Sendung, zu deren Abholung die biometrische Information berechtigt, eingelagert ist

Zum Beispiel zeigt die Berechtigungsanzeigeinformation an, ob eine biometrische Information zur Abholung einer in einer Fachanlage eingelagerten Sendung berechtigt. Dabei handelt es sich insbesondere um jene Sendung, für deren Abholung eine ursprüngliche Berechtigungsinformation zur Abholung berechtigt Beispielsweise zeigt die Berechtigungsanzeigeinformation mittels einer Kennung einer Sendung an, für welche bestimmte Sendung die Berechtigungsanzeigeinformation zur Abholung berechtigt Weiterhin ist beispielsweise für eine solche Sendung, die durch die angezeigte Kennung identifiziert wird, in einem Datenspeicher hinterlegt, in welchem Fach einer welchen Fachanlage die bestimmte Sendung eingelagert wurde. Auf diese Weise kann zumindest teilweise basierend auf der Berechtigungsanzeigeinformation das Fach einer Fachanlage bestimmt werden, in welchem die Sendung, zu deren Abholung die biometrische Information berechtigt, eingelagert ist

Das Bestimmen des Fachs der Fachanlage, in welchem die Sendung, zu deren Abholung die biometrische Information berechtigt, eingelagert ist, kann wahlweise von einem Backend-Server oder von einer Steuereinheit der Fachanlage durchgeführt werden. Dabei kann beispielsweise sowohl am Backend-Server, als auch an der Steuereinheit der Fachanlage in einem entsprechenden Datenspeicher hinterlegt sein, in welchem Fach der Fachanlage welche Sendung eingelagert wurde.

In einer beispielhaften Ausführungsform des Verfahrens gemäß dem dritten Aspekt umfasst das Bereitstellen einer Berechtigungsinformation das Übertragen der Berechtigungsinformation an eine Benutzervorrichtung, wobei das Erhalten einer Berechtigungsanzeigeinformation und einer biometrischen Information ein Empfangen der Berechtigungsanzeigeinformation und der biometrischen Information von der Benutzervorrichtung umfasst, und wobei das Bereitstellen der Berechtigungsanzeigeinformation und der biometrischen Information ein Übertragen der Berechtigungsanzeigeinformation und der biometrischen Information an eine Steuereinheit einer Fachanlage umfasst.

Zum Beispiel überträgt ein Backend-Server die bereitgestellte Berechtigungsinformation an eine Benutzervorrichtung, an welcher die Berechtigungsinformation wie zum Verfahren gemäß dem ersten Aspekt beschrieben empfangen wird und zur Bestimmung einer Berechtigungsanzeigeinformation verwendet wird. Zum Beispiel empfängt der Backend-Server die Berechtigungsanzeigeinformation und die biometrische Information von der Benutzervorrichtung, welche die beiden Information wie zum Verfahren gemäß dem ersten Aspekt beschrieben an den Backend-Server überträgt. Zum Beispiel werden die Berechtigungsanzeigeinformation und die biometrische Information anschließend vom Backend-Server an eine Steuereinheit einer Fachanlage übertragen, an welcher die beiden Informationen wie zum Verfahren gemäß dem zweiten Aspekt beschrieben empfangen werden.

In einer beispielhaften Ausführungsform der Verfahren gemäß den verschiedenen Aspekten ist das zumindest eine biometrische Merkmal der Person ein Gesichtsmerkmal der Person.

Gemäß einem weiteren Aspekt der vorliegenden Offenbarung wird ein System offenbart, welches zumindest eine Vorrichtung gemäß dem ersten Aspekt, eine Vorrichtung gemäß dem zweiten Aspekt und eine Vorrichtung gemäß dem dritten Aspekt umfasst

Beispielsweise handelt es sich bei der Vorrichtung gemäß dem ersten Aspekt um eine Benutzervorrichtung (z.B. ein Smartphone), bei der Vorrichtung gemäß dem zweiten Aspekt um eine Steuereinheit der Fachanlage oder einen Backend-Server und bei der Vorrichtung gemäß dem dritten Aspekt um einen Backend-Server. Zum Beispiel kann das System weitere Vorrichtungen und/oder Komponenten von Vorrichtungen umfassen.

Die oben beschriebenen Ausführungsbeispiele und beispielhaften Ausgestaltungen aller Aspekte der vorliegenden Offenbarung sollen auch in allen Kombinationen miteinander offenbart verstanden werden. Insbesondere gilt die Offenbarung eines Verfahrensschrittes auch als Offenbarung von Mitteln zur Durchführung des jeweiligen Verfahrensschrittes. Ebenso gilt die Offenbarung von Mitteln zur Durchführung eines Verfahrensschritts auch als Offenbarung des Verfahrensschritts selbst

Weitere vorteilhafte beispielhafte Ausgestaltungen der vorliegenden Offenbarung sind der folgenden detaillierten Beschreibung einiger beispielhafter Ausführungsformen insbesondere in Verbindung mit den Figuren zu entnehmen. Die beiliegenden Figuren sollen jedoch nur dem Zwecke der Verdeutlichung, nicht aber zur Bestimmung des Schutzbereiches der Ansprüche dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Systems gemäß einem Aspekt der vorliegenden Offenbarung;
- Fig. 2: ein Flussdiagramm einer bespielhaften Ausführungsform eines Verfahrens gemäß dem ersten Aspekt der vorliegenden Offenbarung;
- Fig. 3a und 3b: schematische Darstellungen einer beispielhaften Umgebung, in welcher ein Verfahren gemäß dem ersten Aspekt der vorliegenden Offenbarung abläuft;
- Fig. 4: ein Flussdiagramm einer bespielhaften Ausführungsform eines Verfahrens gemäß dem zweiten Aspekt der vorliegenden Offenbarung;
- Fig. 5: eine schematische Darstellung einer beispielhaften Umgebung, in welcher ein Verfahren gemäß dem zweiten Aspekt der vorliegenden Offenbarung abläuft;
- Fig. 6: ein Flussdiagramm einer bespielhaften Ausführungsform eines Verfahrens gemäß dem dritten Aspekt der vorliegenden Offenbarung;
- Fig. 7: eine schematische Darstellung einer beispielhaften Ausführungsform einer Benutzervorrichtung gemäß dem ersten Aspekt der vorliegenden Offenbarung;
- Fig. 8: eine schematische Darstellung einer beispielhaften Ausführungsform einer Steuereinheit einer Fachanlage gemäß dem zweiten Aspekt der vorliegenden Offenbarung;
- Fig. 9: eine schematische Darstellung einer beispielhaften Ausführungsform eines Backend-Servers gemäß dem zweiten oder dritten Aspekt der vorliegenden Offenbarung; und
- Fig. 10: beispielhafte Ausführungsformen von Speichermedien.

### Detaillierte Beschreibung einiger beispielhaften Ausführungsformen

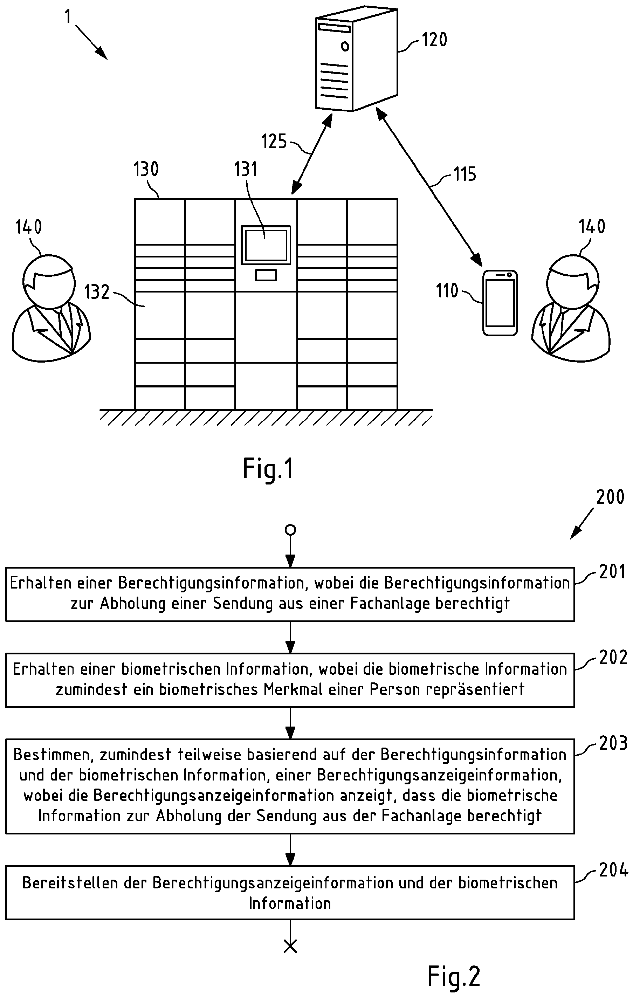

Fig. 1 zeigt eine schematische Darstellung einer beispielhaften Ausführungsform eines Systems 1 gemäß einem Aspekt der vorliegenden Offenbarung.

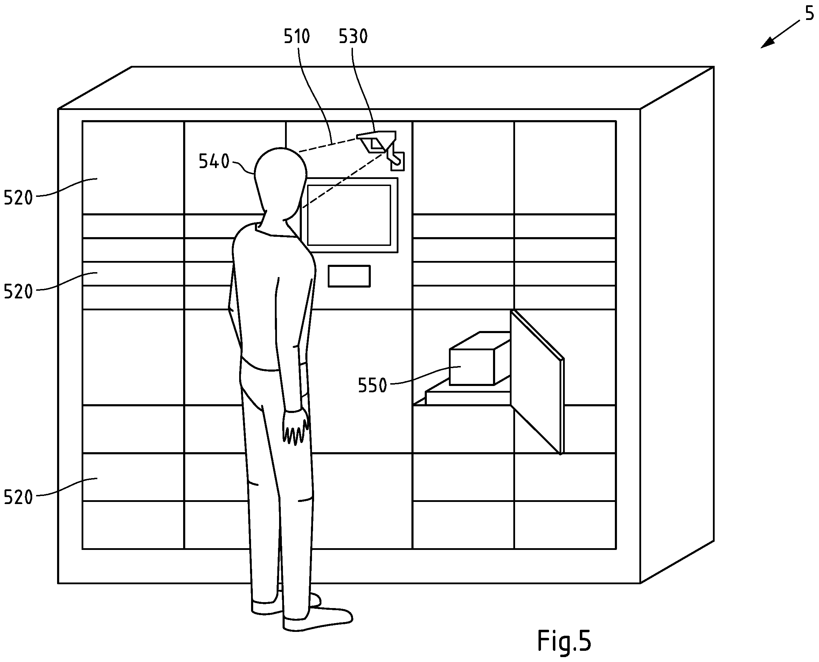

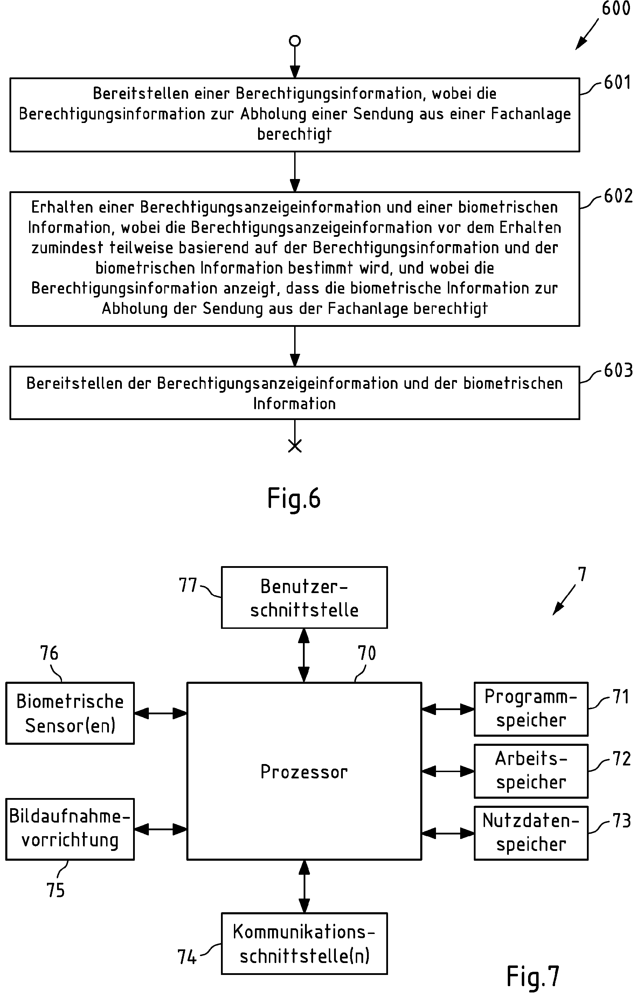

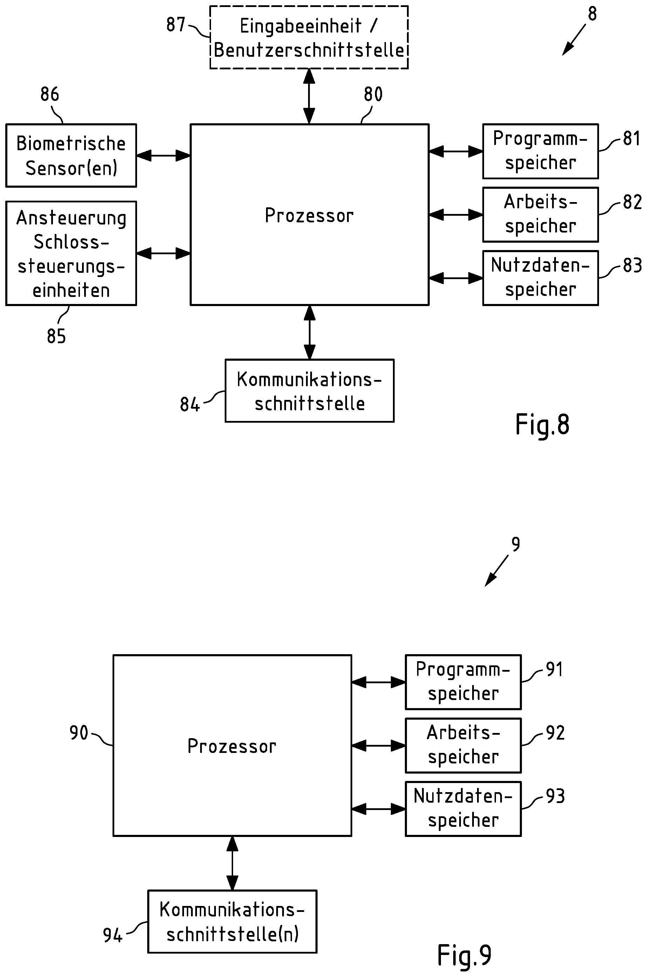

System 1 umfasst beispielhaft eine Fachanlage 130 (z. B. die in Fig. 5 dargestellte Fachanlage 5) mit einer Steuereinheit 131 der Fachanlage 130 (z.B. die in Fig. 8 dargestellte Steuereinheit), einen Backend-Server 120 (z.B. den in Fig. 9 dargestellten Backend-Server 9) und eine Benutzervorrichtung 110 (z.B. die in Fig. 7 dargestellte Benutzervorrichtung 7), welche beispielhaft als Benutzervorrichtung eines Benutzers 140, welcher eine in der Fachanlage 130 eingelagerte Sendung abholen möchte, verstanden werden soll.

Die Benutzervorrichtung 110 ist insbesondere zur Fern-Kommunikation eingerichtet, sie weist also beispielsweise eine Schnittstelle zu einem zellularen Mobilfunksystem, eine DSL-Schnittstelle oder eine Local Area Network (LAN)-Schnittstelle auf, mittels derer sie über die Kommunikationsverbindung 115 mit dem Backend-Server 120 kommunizieren kann. Die Benutzervorrichtung 110 kann zum Beispiel als Smartphone verstanden, sie kann allerdings ebenso durch andere Formen von elektronischen Endbenutzergeräten (z.B. Desktop-Computer, Laptop oder Tablet) gegeben sein.

Die Steuereinheit 131 der Fachanlage 130 ist beispielhaft mit zumindest einer Kommunikationsschnittstelle zur Kommunikation mit dem Backend-Server 120 eingerichtet, verfügt also beispielsweise über eine Kommunikationsschnittstelle, die einen Zugang zum Internet oder zu einem anderen Netz, an das der Backend-Server 120 angeschlossen ist, ermöglicht Die Steuereinheit 131 ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels derer sie über die Kommunikationsverbindung 125 mit dem Backend-Server 120 kommunizieren kann.

Der Backend-Server 120 kann zum Beispiel eine Vielzahl von Fachanlagen einschließlich der Fachanlage 130 und/oder eine Vielzahl von Benutzern einschließlich des Benutzers 140 verwalten und/oder mit ihnen kommunizieren. Der Backend-Server 120 kann beispielsweise über eine Kommunikationsverbindung 125 mit der Steuereinheit 131 der Fachanlage 130 kommunizieren.

Zum Beispiel möchte der dargestellte Benutzer 140 eine an den Benutzer 140 adressierte Sendung, die im Zuge der Sendungszustellung in die Fachanlage 130 eingelagert wurde, aus der Fachanlage 130 abholen. Die Verfahren gemäß den verschiedenen Aspekten der vorliegenden Offenbarung zum Zweck einer solchen Abholung werden nachfolgend mit Bezug auf Fig. 2, Fig. 4 und Fig. 6 beschrieben.

Fig. 2 zeigt ein Flussdiagramm einer bespielhaften Ausführungsform eines Verfahrens 200 gemäß dem ersten Aspekt der vorliegenden Offenbarung. Nachfolgend wird das Verfahren 200 beispielhaft in Bezug auf das in Fig. 1 dargestellte System 1 beschrieben.

Schritt 201 ist das Erhalten einer Berechtigungsinformation, wobei die Berechtigungsinformation zur Abholung einer Sendung aus einer Fachanlage berechtigt.

Zum Beispiel empfängt das Smartphone 110 als Benutzervorrichtung über die Kommunikationsverbindung 115 von dem Backend-Server 120 eine Berechtigungsinformation, wobei die Berechtigungsinformation zur Abholung einer Sendung berechtigt, welche zuvor in die Fachanlage 130 eingelagert wurde. Diese Sendung ist an die Person 140 adressiert, welche die Berechtigungsinformation repräsentiert durch einen QR-Code auf ihrem Smartphone 110 anzeigen lassen kann. Bei Sendungsabholung kann die Person 140 den QR-Code an der Fachanlage 130 vorbringen, sodass dieser von einem Scanner einer Steuereinheit 131 erfasst wird und die Steuereinheit 131 das Öffnen eines entsprechenden Fachs bewirkt.

In einem anderen Beispiel erhält die Person 140 eine Abholkarte mit einem aufgedruckten Barcode, welcher die Berechtigungsinformation repräsentiert. Die Person 140 benutzt daraufhin die Kamera ihres Smartphones 110, um den Barcode zu erfassen, wodurch die Berechtigungsinformation am Smartphone 110 erhalten wird.

Schritt 202 ist das Erhalten einer biometrischen Information, wobei die biometrische Information zumindest ein biometrisches Merkmal einer Person repräsentiert

Zum Beispiel erfasst eine Kamera oder ein Fingerabdrucksensor des Smartphones 110 ein biometrisches Merkmal der Person 140 (z.B. ein Gesichtsmerkmal oder einen Fingerabdruck der Person 140), und das Smartphone 110 bestimmt anschließend basierend auf dem erfassten biometrischen Merkmal eine biometrische Information.

Schritt 203 ist das Bestimmen, zumindest teilweise basierend auf der Berechtigungsinformation und der biometrischen Information, einer Berechtigungsanzeigeinformation, wobei die Berechtigungsanzeigeinformation anzeigt, dass die biometrische Information zur Abholung der Sendung aus der Fachanlage berechtigt

Zum Beispiel bestimmt das Smartphone 110 basierend auf der in Schritt 201 erhaltenen Berechtigungsinformation und der in Schritt 202 erhaltenen biometrischen Information, in Schritt 203 eine Berechtigungsanzeigeinformation, wobei die Berechtigungsanzeigeinformation anzeigt, dass die in Schritt 202 erhaltene biometrische Information zur Abholung der an die Person 140 adressierten Sendung aus der Fachanlage 130 berechtigt Dabei kann die biometrische Information beispielsweise nur zur Abholung der bestimmten Sendung berechtigen, zu der auch die in Schritt 201 erhaltene Berechtigungsinformation berechtigt

Schritt 204 ist das Bereitstellen der Berechtigungsanzeigeinformation und der biometrischen Information.

Zum Beispiel überträgt das Smartphone 110 die in Schritt 203 bestimmte Berechtigungsanzeigeinformation und die in Schritt 202 erhaltene biometrische Information über die Kommunikationsverbindung 115 an den Backend-Server 120.

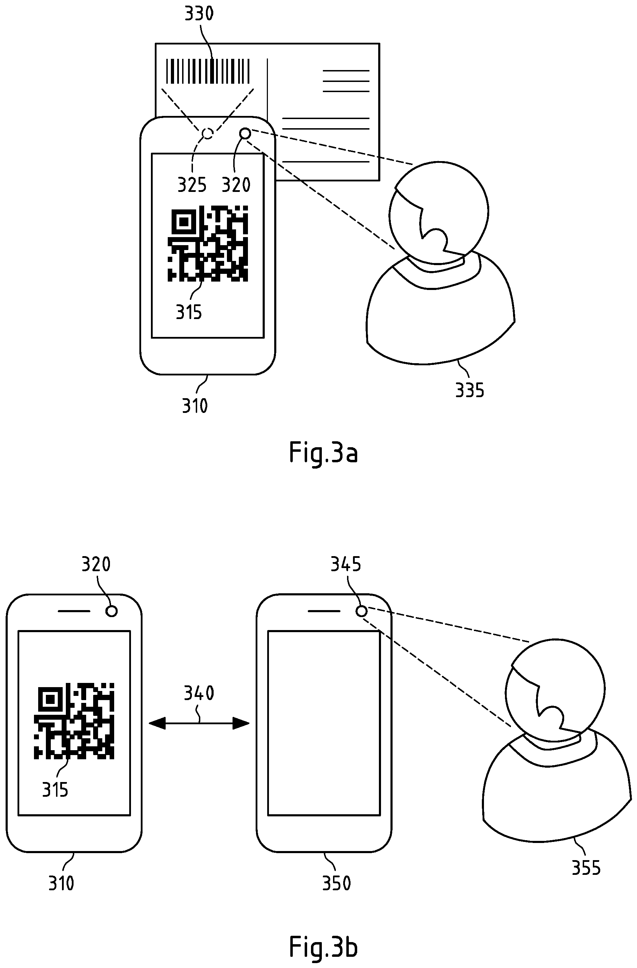

Fig. 3a und Fig. 3b zeigen schematische Darstellungen einer beispielhaften Umgebung, in welcher ein Verfahren gemäß dem ersten Aspekt der vorliegenden Offenbarung abläuft

Fig. 3a und Fig. 3b zeigen beispielhaft ein Smartphone 310, das als Benutzervorrichtung verstanden werden soll und dem Smartphone 110 als Teil des in Fig. 1 dargestellten Systems 1 entsprechen kann. Das Smartphone 310 wird dabei von einem Benutzer 335 bedient, welcher der Person 140 innerhalb des Systems 1 entsprechen kann. In der in Fig. 3a und Fig. 3b beispielhaft dargestellten Umgebung kann zum Beispiel wie nachfolgend beschrieben das in Fig. 2 dargestellte Verfahren 200 ablaufen.

Zunächst empfängt das Smartphone 310 eine Berechtigungsinformation, welche durch einen Abholcode 330 (z.B. einen Barcode) gegeben ist (vgl. Schritt 201). Die Berechtigungsinformation berechtigt die Person 335 zum Abholen einer Sendung aus einer Fachanlage. Wie in Fig. 3a beispielhaft dargestellt wird die Berechtigungsinformation am Smartphone 310 der Person 335 erhalten, indem der auf einer Abholkarte aufgedruckte Abholcode 330 von einer Kamera 325 des Smartphones 310 erfasst wird, sodass das Smartphone 310 die von dem Abholcode 330 repräsentierte Berechtigungsinformation erhält. In einem weiteren Beispiel empfängt das Smartphone 310 die Berechtigungsinformation (die z.B. durch einen QR-Code 315 repräsentiert wird) von einem Backend-Server (z.B. über eine Schnittstelle zu einem zellularen Mobilfunksystem).

Anschließend erfasst eine weitere Kamera 320 des Smartphones 310 also biometrischer Sensor ein Gesichtsmerkmal der Person 335 (vgl. Schritt 202), wobei das Smartphone 310 basierend auf dem erfassten Gesichtsmerkmal eine biometrische Information bestimmt, welche das erfasste Gesichtsmerkmal repräsentiert (vgl. Schritt 203). Unter Verwendung dieser biometrischen Information und der Berechtigungsinformation bestimmt das Smartphone 310 eine Berechtigungsanzeigeinformation, die anzeigt, dass die biometrische Information zur Abholung der Sendung aus einer Fachanlage berechtigt.

In Ergänzung zum Smartphone 310 ist in Fig. 3b ein Smartphone 350 als beispielhafte weitere Benutzervorrichtung dargestellt In einem Beispiel führt das Smartphone 310, an welcher zuvor die durch den QR-Code 315 repräsentierte Berechtigungsinformation erhalten wurde, eine Anfrage an das Smartphone 350 durch. Dazu sendet das Smartphone 310 eine Anfragenachricht über die Kommunikationsverbindung 340 (z.B. mittels einer Schnittstelle zu einem zellularen Mobilfunksystem, einer WLAN-Schnittstelle oder einer Bluetooth-Schnittstelle) an das Smartphone 350. Die gesendete Anfragenachricht zeigt an, dass von dem Smartphone 350 eine biometrische Information angefordert wird, wobei die angefragte biometrische Information zumindest ein biometrisches Merkmal der Person 355 repräsentiert, welche sich von der Person 335 unterscheidet. Der Schritt des Anfragens der biometrischen Information an dem Smartphone 350 wird durch eine Benutzeraktion der Person 335 an dem Smartphone 310 ausgelöst, wobei basierend auf der Benutzeraktion das Smartphone 350 bestimmt wird. Somit wird die Anfrage an das Smartphone 350 nur dann ausgelöst, wenn die Person 335 diese Anfrage veranlasst hat.

Zum Beispiel führt das Smartphone 350 in Antwort auf die von dem Smartphone 310 erhaltene Anfrage ein Erhalten der angefragten biometrischen Information durch. Dieses Erhalten kann das Erfassen eines Gesichtsmerkmals der Person 355 durch eine Kamera 345 als biometrischen Sensor des Smartphones 350 umfassen, wobei das Smartphone 350 die angefragte biometrische Information basierend auf dem erfassten Gesichtsmerkmal derart bestimmt, dass die angefragte biometrische Information das erfasste Gesichtsmerkmal der Person 355 repräsentiert

Nachdem das Smartphone 350 die angefragte biometrische Information bestimmt hat, kann das Smartphone 350 die angefragte biometrische Information über die Kommunikationsverbindung 340 an das Smartphone 310 senden, welche die biometrische Information ursprünglich angefragt hat Das Smartphone 310 bestimmt nachfolgend basierend auf der erhaltenen Berechtigungsinformation (z.B. repräsentiert durch den QR-Code 315) und der von dem Smartphone 350 empfangenen biometrischen Information die Berechtigungsanzeigeinformation.

Vorteilhafterweise kann durch die Anfrage des Smartphones 350 eine biometrische Information erhalten werden, die ein biometrisches Merkmal der dritten Person 355 repräsentiert. Bei dieser dritten Person 355 kann es sich um eine Person handeln, welcher der ursprüngliche Empfänger 335 der eingelagerten Sendung die Abholung der eingelagerten Sendung übertragen möchte. Indem ein biometrisches Merkmal von dieser dritten Person 355 erfasst wird und weiterhin eine Berechtigungsanzeigeinformation bestimmt wird, welche anzeigt, dass eine das biometrische Merkmal der dritten Person 355 repräsentierende biometrische Information zur Abholung der Sendung berechtigt, kann die dritte Person 355 von dem ursprünglichen Empfänger 335 der herkömmlichen Berechtigungsinformation flexibel zur Abholung der Sendung berechtigt werden. Vorteilhafterweise ist es für die dritte Person 355 nicht erforderlich, die herkömmliche Berechtigungsinformation (z.B. repräsentiert durch den QR-Code 315) zu erhalten und bei der Abholung der Sendung an der Fachanlage vorzubringen. Zugleich ist die beschriebene Übertragung der Abholberechtigung sicher gegenüber Betrugsversuchen, da die Übertragung über das Smartphone 310 des ursprünglichen Empfängers 335 der herkömmlichen Berechtigungsinformation läuft und somit unter der Kontrolle des ursprünglichen Empfängers 335 steht, welcher entscheiden kann, ob und von welchem weiteren Smartphone eine biometrische Information angefragt wird.

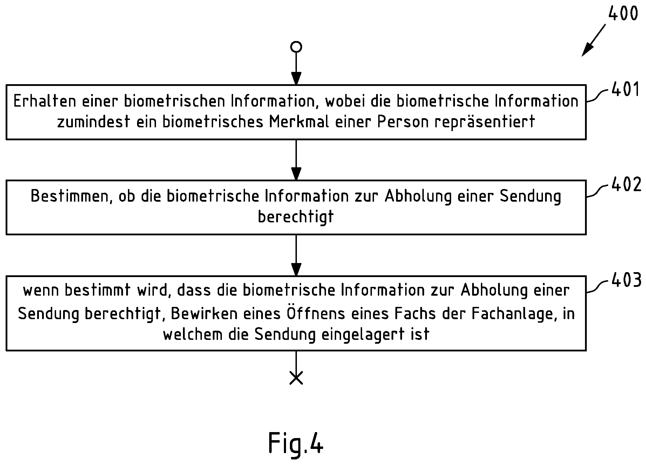

Fig. 4 zeigt ein Flussdiagramm einer bespielhaften Ausführungsform eines Verfahrens 400 gemäß dem zweiten Aspekt der vorliegenden Offenbarung. Nachfolgend wird das Verfahren 400 beispielhaft in Bezug auf das in Fig. 1 dargestellte System 1 beschrieben.

Mit Blick auf das System 1 kann das Verfahren 400 von dem Backend-Server 120 oder von der Steuereinheit 131 der Fachanlage 130 durchgeführt werden. Das Verfahren 400 kann beispielsweise zeitlich nach dem in Fig. 2 dargestellten Verfahren 200 ablaufen, also nachdem eine Person 140 mit ihrem Smartphone 110 zumindest ein biometrisches Merkmal von sich erfasst hat und eine entsprechende Berechtigungsanzeigeinformation durch das Smartphone 110 bestimmt und an den Backend-Server 120 übertragen wurde. Zum Beispiel hat sich die Person 140 anschließend zur Fachanlage 130 begeben, um die an sie adressierte, in der Fachanlage 130 eingelagerte Sendung abzuholen.

Schritt 401 ist das Erhalten einer biometrischen Information, wobei die biometrische Information zumindest ein biometrisches Merkmal einer Person repräsentiert

Wird das Erhalten einer biometrischen Information von der Steuereinheit 131 der Fachanlage 130 durchgeführt, steuert die Steuereinheit 131 zum Beispiel einen biometrischen Sensor der Fachanlage 130 an, sodass dieser ein biometrisches Merkmal der Person 140 erfasst. Wenn von der Person 140 zuvor wie zu Schritt 202 des in Fig. 2 dargestellten Verfahrens 200 beschrieben als biometrisches Merkmal ein Gesichtsmerkmal oder ein Fingerabdruck von einem biometrische Sensor des Smartphones 110 erfasst worden ist, wird eben jenes biometrische Merkmal in Schritt 401 ebenso von einem biometrischen Sensor der Fachanlage 130 erfasst.

Wird das Erhalten einer biometrischen Information von dem Backend-Server 120 durchgeführt, empfängt der Backend-Server 120 über die Kommunikationsverbindung 125 die biometrische Information von der Steuereinheit 131 der Fachanlage 130. Vor der Übertragung der biometrischen Information wird die biometrische Information an der Steuereinheit 131 erhalten, indem das durch die biometrische Information repräsentierte biometrische Merkmal durch einen biometrischen Sensor der Fachanlage 130 erfasst wird.

Schritt 402 ist das Bestimmen, ob die biometrische Information zur Abholung einer Sendung berechtigt

Wird das Bestimmen, ob die biometrische Information zur Abholung einer Sendung berechtigt, von dem Backend-Server 120 durchgeführt, ermittelt der Backend-Server 120 zum Beispiel, ob in einem Datenspeicher des Backend-Servers 120 eine Berechtigungsanzeigeinformation vorliegt, welche anzeigt, dass die in Schritt 401 erhaltene biometrische Information zur Abholung einer Sendung berechtigt Bei dieser vorliegenden Berechtigungsanzeigeinformation handelt es sich um die Berechtigungsanzeigeinformation, welche zuvor wie zum in Fig. 2 dargestellten Verfahren 200 beschrieben an dem Smartphone 110 bestimmt und anschließend an den Backend-Server 120 übertragen wurde.

Zum Beispiel kann das Bestimmen in Schritt 402 einen Vergleich der in Schritt 401 erhaltenen biometrischen Information mit einer Vielzahl von in einem Datenspeicher des Backend-Servers 120 vorliegenden biometrischen Informationen umfassen. Dabei wird bestimmt, ob die erhaltene biometrische Information mit einer der bereits vorliegenden biometrischen Informationen übereinstimmt Falls die erhaltene biometrische Information mit einer bereits vorliegenden biometrischen Information übereinstimmt, wird anschließend durch den Backend-Server 120 bestimmt, ob eine Berechtigungsanzeigeinformation vorliegt, welche anzeigt, dass die bereits vorliegende biometrische Information, die mit der erhaltenen biometrischen Information übereinstimmt, zur Abholung einer Sendung berechtigt. Falls eine derartige Berechtigungsanzeigeinformation vorliegt, wird in Schritt 402 bestimmt, dass die erhaltene biometrische Information zur Abholung einer Sendung berechtigt Dabei kann die erhaltene biometrische Information mit einer vorliegenden biometrischen Information übereinstimmen, wenn das von der erhaltenen biometrischen Information repräsentierte biometrische Merkmal (hier z.B. ein Gesichtsmerkmal oder Fingerabdruck der Person 140) mit dem von der vorliegenden biometrischen Information repräsentierten biometrischen Merkmal (z.B. innerhalb einer vorgegebenen Toleranz) übereinstimmt

In einem weiteren Beispiel kann das Bestimmen in Schritt 402 von der Steuereinheit 131 der Fachanlage 130 durchgeführt werden. Dann ermittelt die Steuereinheit 131 beispielsweise, ob in einem Datenspeicher der Steuereinheit 131 eine Berechtigungsanzeigeinformation vorliegt, welche anzeigt, dass die in Schritt 401 erhaltene biometrische Information zur Abholung einer Sendung berechtigt Zum Beispiel kann das Bestimmen in Schritt 402 wie oben beschrieben einen Vergleich der in Schritt 401 erhaltenen biometrischen Information mit einer Vielzahl von vorliegenden biometrischen Informationen umfassen. Dabei können die bereits vorliegenden biometrischen Informationen in einem Datenspeicher der Steuereinheit 131 gespeichert sein oder von der Steuereinheit 131 an dem Backend-Server 120 angefordert werden, woraufhin die angeforderten bereits vorliegenden biometrische Information von dem Backend-Server 120 an die Steuereinheit 131 übertragen und an der Steuereinheit 131 mit der erhaltenen biometrischen Information verglichen werden. In einem anderen Beispiel kann das Bestimmen in Schritt 402 eine Übertragung der erhaltenen biometrischen Information von der Steuereinheit 131 an den Backend-Server 120 umfassen, wobei der Backend-Server 120 den oben beschriebenen Vergleich durchgeführt und anschließend ein Ergebnis des Vergleichs an die Steuereinheit 131 zurücksendet An der Steuereinheit 131 kann dann basierend auf dem empfangenen Ergebnis des Vergleichs bestimmt werden, dass die in Schritt 401erhaltene biometrische Information zur Abholung einer Sendung berechtigt

Schritt 403 ist das Bewirken eines Öffnens eines Fachs einer Fachanlage, in welchem die Sendung eingelagert ist, wenn bestimmt wird, dass die biometrische Information zur Abholung einer Sendung berechtigt

Ein Bewirken des Öffnens in Schritt 403 erfolgt dann (z.B. nur dann), wenn in Schritt 402 bestimmt wird, dass die erhaltene biometrische Information zur Abholung einer Sendung berechtigt Anderenfalls kann die Steuereinheit 131 eine Information ausgeben (z.B. über eine Benutzerschnittstelle der Steuereinheit 131), welche anzeigt, dass für die Person 140, von der die erhaltene biometrische Information ein biometrisches Merkmal repräsentiert, keine Sendung zur Abholung in der Fachanlage 130 vorhanden ist.

Wenn das Bewirken des Öffnens in Schritt 403 von der Steuereinheit 131 durchgeführt wird, kann das Bewirken des Öffnens das Ansteuern einer entsprechenden Schlosssteuereinheit eines Fachs der Fachanlage 130, in welchem die betreffende Sendung eingelagert ist, umfassen. Dabei wird die Schlosssteuereinheit derart angesteuert, dass sie das Fach der Fachanlage 130 öffnet (z.B. indem ein Schloss des Fachs entriegelt wird).

Wenn das Bewirken des Öffnens in Schritt 403 von dem Backend-Server 120 durchgeführt wird, kann das Bewirken des Öffnens umfassen, dass der Backend-Server 120 einen Befehl an die Steuereinheit 131 sendet, ein bestimmtes Fach der Fachanlage 130 zu öffnen. Daraufhin steuert die Steuereinheit 131 eine entsprechende Schlosssteuereinheit an, sodass das Fach geöffnet wird. Das Bewirken des Öffnens kann in einem solchen Fall umfassen, dass der Backend-Server 120 zunächst bestimmt, in welcher Fachanlage die Sendung, wofür welche die erhaltene biometrische Information zur Abholung berechtigt, eingelagert ist, und anschließend einen Öffnungsbefehl an die Steuereinheit 131 sendet

Nach Schritt 403 werden die in den Schritten 202 und 402 erhaltenen biometrischen Informationen aus den entsprechenden Datenspeichern (z.B. an dem Backend-Server 120 und/oder der Steuereinheit 131) gelöscht

Gemäß den in Fig. 2 und Fig. 4 dargestellten Verfahren kann eine Person 140 vorteilhafterweise als Sendungsempfänger mittels ihres Smartphones 110 basierend auf einer in Schritt 201 erhaltenen herkömmlichen Berechtigungsinformation für die Abholung einer Sendung in Schritt 202 ein oder mehrere biometrische Merkmale ihrer Person (z.B. ein Gesichtsmerkmal) erfassen. Daraufhin wird durch das Smartphone 110 in Schritt 203 bestimmt, dass zusätzlich oder alternativ zu der herkömmlichen Berechtigungsinformation eine biometrische Information, die das erfasste biometrische Merkmal repräsentiert, zur Abholung der Sendung berechtigt Das Smartphone 110 überträgt in Schritt 204 eine entsprechende biometrische Information und eine Berechtigungsanzeigeinformation an einen Backend-Server 120, welcher in Kommunikation mit der Fachanlage 130 steht, in welcher die Sendung eingelagert ist Die Person 140 kann demnach anschließend an der betreffenden Fachanlage 130 jenes biometrische Merkmal von entsprechenden Sensoren der Fachanlage 130 in Schritt 401 erfassen lassen, sodass nach einer Überprüfung in Schritt 402 die entsprechende Sendung in Schritt 403 herausgegeben wird. Somit ist vorteilhafterweise ein Mitführen und Vorbringen der herkömmlichen Berechtigungsinformation an der Fachanlage 130 für die Herausgabe der eingelagerten Sendung nicht mehr erforderlich.

Anstatt einer herkömmlichen Berechtigungsinformation genügt vor Ort an der Fachanlage vorteilhafterweise das Erfassen eines biometrischen Merkmals zur Abholung einer eingelagerten Sendung, sodass die Person 140 keine zusätzlichen Informationen oder Nachweise mitführen muss, um die betreffende Sendung abzuholen. Vorteilhafterweise kann die biometrische Information zur Abholung einer bestimmten Sendung berechtigen, sodass sie nach dem Abholen dieser Sendung aus sämtlichen Datenspeichern (z.B. Datenspeichern der Steuereinheit 131 der Fachanlage 130 oder des Backend-Servers 120) gelöscht werden kann. Somit ist vorteilhafterweise sichergestellt, dass die (z.B. sensible) biometrische Information nur temporär bis zum Zeitpunkt der Sendungsabholung abgespeichert wird.

Fig. 5 zeigt eine schematische Darstellung einer beispielhaften Umgebung, in welcher ein Verfahren gemäß dem zweiten Aspekt der vorliegenden Offenbarung abläuft.

Beispielsweise umfasst die in Fig. 5 dargestellte Fachanlage 5 eine Steuereinheit 510, welche die Funktionen der Fachanlage 5 steuert Die Fachanlage 5 kann eine Fachanlage 130 des in Fig. 1 dargestellten Systems 1 sein, wobei eine beispielhafte Ausführungsform der Steuereinheit 510 durch die in Fig. 8 dargestellte Steuereinheit 8 gegeben sein kann.

Darüber hinaus umfasst die Fachanlage 5 eine Vielzahl von Fächern 520, welche beispielsweise zur Aufnahme von Sendungen (z.B. Briefe, Pakete, Päckchen) oder Lieferungen oder Gegenständen (z.B. Wertgegenstände, Gepäck, etc.) eingerichtet sind. Zumindest einige der Fächer 520 sind jeweils verschließbar mittels einer jeweiligen Tür oder Klappe. Zumindest einige der Fächer 520 sind mit einem jeweiligen Schloss versehen, um den Zugang von Personen zu diesen einzelnen Fächern 520 der Fachanlage 5 kontrollieren zu können.

Das Schloss eines jeweiligen Fachs 520 ist durch die Steuereinheit 510 steuerbar, insbesondere in elektronischer Form. Insbesondere kann die Steuereinheit 510 zumindest den Prozess des Verriegelns und/oder Entriegelns des Schlosses und somit das Schließen und/oder Öffnen des jeweiligen Fachs 520 steuern. Die Steuerung des Schlosses eines Fachs 520 kann beispielsweise durch eine Schlosssteuereinheit erfolgen, wobei alle Schlosssteuereinheiten oder diejenigen eines oder mehrerer Module der Fachanlage 5 beispielsweise durch die übergeordnete Steuereinheit 510 der Fachanlage 5 gesteuert werden.

Darüber hinaus umfasst die Fachanlage 5 einen biometrischen Sensor, welcher beispielhaft durch die Kamera 530 gegeben ist Die Kamera 530 erfasst beispielsweise Bilder eines Gesichts der Person 540 aus verschiedenen Winkeln und Distanzen, sodass die Steuereinheit 510 der Fachanlage 5 basierend auf den erfassten Bildern beispielsweise mittels Bildverarbeitung (z.B. eines Bildanalysealgorithmus) ein oder mehrere Gesichtsmerkmale der Person 540 bestimmen kann. Des Weiteren kann die Kamera 530 (z.B. als Infrarotkamera) der Fachanlage 5 eine dreidimensionale Form des Gesichts der Person 540 erfassen, beispielsweise indem zunächst ein Punktmuster auf das Gesicht projiziert wird und die Kamera anschließend das reflektierte Punktmuster erfasst

In der in Fig. 5 beispielhaft dargestellten Umgebung kann zum Beispiel wie nachfolgend beschrieben das in Fig. 4 dargestellte Verfahren 400 ablaufen.

Zum Beispiel steuert die Steuereinheit 510 die Kamera 530 der Fachanlage 5 an, sodass die Kamera 530 ein Gesichtsmerkmal der Person 540 erfasst (vgl. Schritt 401). Bei der Person 540 handelt es sich um den Empfänger der Sendung 550, die in der Fachanlage 5 eingelagert ist. Basierend auf dem erfassten Gesichtsmerkmal bestimmt die Steuereinheit 510 anschließend eine biometrische Information, welche das Gesichtsmerkmal repräsentiert.

In einem nächsten Schritt (vgl. Schritt 402) ermittelt die Steuereinheit 510, ob in einem Datenspeicher der Steuereinheit 510 eine Berechtigungsanzeigeinformation vorliegt, welche anzeigt, dass die zuvor erhaltene biometrische Information zur Abholung einer Sendung berechtigt Zum Beispiel kann dieses Bestimmen einen Vergleich der erhaltenen biometrischen Information mit einer Vielzahl von vorliegenden biometrischen Informationen umfassen, die in einem Datenspeicher der Steuereinheit 510 gespeichert sein können oder von der Steuereinheit 510 an einem Backend-Server angefordert werden können.

Wenn die Steuereinheit 510 bestimmt, dass die erhaltene biometrische Information zur Abholung einer Sendung berechtigt, bewirkt sie ein Öffnen des Fachs der Fachanlage 5, in welchem die Sendung 550 eingelagert ist (vgl. Schritt 403).

Fig. 6 zeigt ein Flussdiagramm einer bespielhaften Ausführungsform eines Verfahrens 600 gemäß dem dritten Aspekt der vorliegenden Offenbarung. Nachfolgend wird das Verfahren 600 beispielhaft in Bezug auf das in Fig. 1 dargestellte System 1 beschrieben.

Mit Blick auf das System 1 kann das Verfahren 600 von dem Backend-Server 120 durchgeführt werden. Die Schritte 601 bis 603 können demnach als korrespondierend zu den Schritten des in Fig. 2 dargestellten Verfahrens 200 und des in Fig. 4 dargestellten Verfahrens 400 verstanden werden.

Schritt 601 ist das Bereitstellen einer Berechtigungsinformation, wobei die Berechtigungsinformation zur Abholung einer Sendung aus einer Fachanlage berechtigt.

Das Bereitstellen in Schritt 601 soll so verstanden werden, dass der Backend-Server 120 die Berechtigungsinformation der Person 140 (z.B. dem Empfänger der Sendung, für welche die Berechtigungsinformation zur Abholung berechtigt) zur Verfügung stellt, sodass die Person 140 mittels der Berechtigungsinformation berechtigt ist, die Sendung aus der Fachanlage 130 abzuholen. Zum Beispiel sendet der Backend-Server 120 die Berechtigungsinformation über die Kommunikationsverbindung 115 an das Smartphone 110 der zu berechtigenden Person 140. In einem weiteren Beispiel sendet der Backend-Server 120 die Berechtigungsinformation an ein tragbares Zustellergerät (z.B. das Zustellergerät des Zustellers, welcher die betreffende Sendung zuvor in die Fachanlage 130 eingelagert hat). In einem solchen Fall kann die Berechtigungsinformation beispielsweise in Form eines Barcodes von dem Zustellergerät (z.B. ein Handheldgerät ausgestattet mit einem Scanner und Drucker) ausgedruckt werden, wobei der ausgedruckte Barcode (z.B. auf einer Abholkarte aufgedruckt) anschließend vom Zusteller in einen Briefkasten der Person 140 eingelegt wird.

Schritt 602 ist das Erhalten einer Berechtigungsanzeigeinformation und einer biometrischen Information, wobei die Berechtigungsanzeigeinformation vor dem Erhalten zumindest teilweise basierend auf der Berechtigungsinformation und der biometrischen Information bestimmt wird, und wobei die Berechtigungsinformation anzeigt, dass die biometrische Information zur Abholung der Sendung aus der Fachanlage berechtigt.

Zum Beispiel wird die vom Backend-Server 120 in Schritt 601 bereitgestellte Berechtigungsinformation am Smartphone 110 wie zum in Fig. 2 dargestellten Verfahren 200 für Schritt 201 beschrieben erhalten. Demnach wird zu einem späteren Zeitpunkt an dem Smartphone 110 basierend auf der in Schritt 201 erhaltenen Berechtigungsinformation und der in Schritt 202 erhaltenen biometrischen Information eine Berechtigungsanzeigeinformation bestimmt. Diese Berechtigungsanzeigeinformation wird zusammen mit der biometrischen Information von dem Smartphone 110 an den Backend-Server 120 zurückübertragen, sodass die Berechtigungsanzeigeinformation und die biometrische Information in Schritt 602 an dem Backend-Server 120 erhalten werden.

Schritt 603 ist das Bereitstellen der Berechtigungsanzeigeinformation und der biometrischen Information.

Die in Schritt 603 bereitgestellte Berechtigungsanzeigeinformation und biometrische Information können im weiteren Verlauf als eine vorliegende biometrische Information beziehungsweise als eine vorliegende Berechtigungsanzeigeinformation verstanden werden.

Das Bereitstellen in Schritt 603 kann das Abspeichern dieser Informationen in einem Datenspeicher des Backend-Servers 120 umfassen. In einem weiteren Beispiel kann das Bereitstellen in Schritt 603 umfassen, dass diese Informationen an die Steuereinheit 131 der Fachanlage 130 gesendet werden, wobei diese Informationen anschließend in einem Datenspeicher der Steuereinheit 131 abgespeichert werden. Hierzu kann der Backend-Server 120 zunächst bestimmen, in welcher Fachanlage 130 die Sendung, für welche die Berechtigungsanzeigeinformation anzeigt, dass die biometrische Information zur Abholung berechtigt, zuvor eingelagert wurde. Anschließend kann der Backend-Server 129 die beiden Informationen an die Steuereinheit 131 der bestimmten Fachanlage 130 senden. An dieser Fachanlage kann im weiteren Verlauf ein Verfahren 400 wie in Fig. 4 dargestellt ablaufen, im Rahmen dessen die eingelagerte Sendung abgeholt wird.

Fig. 7 zeigt eine schematische Darstellung einer beispielhaften Ausführungsform einer Benutzervorrichtung 7 gemäß dem ersten Aspekt der vorliegenden Offenbarung. Bei der Benutzervorrichtung 7 kann es sich beispielsweise um ein Smartphone handeln, also insbesondere um ein Mobiltelefon mit der Fähigkeit, komplexere Programme, sogenannte Apps, selbstständig auszuführen. Die Benutzervorrichtung 7 kann beispielsweise das Smartphone 110 als Teil des in Fig. 1 dargestellten Systems 1 repräsentieren.

Die Benutzervorrichtung 7 umfasst einen Prozessor 70, einen Programmspeicher 71, einen Arbeitsspeicher 72, einen Nutzdatenspeicher 73, eine Kommunikationsschnittelle 74, eine Bildaufnahmevorrichtung 75, zumindest einen biometrischen Sensor 76 und eine Benutzerschnittstelle 77.

Der Prozessor 70 führt beispielsweise ein Programm gemäß dem ersten Aspekt der vorliegenden Offenbarung aus, das in dem Programmspeicher 71 gespeichert ist, beispielsweise als App oder als Firmware. Der Arbeitsspeicher 72 dient insbesondere der Speicherung temporärer Daten während des Ablaufs dieses Programms. Der Nutzdatenspeicher 73 dient der Speicherung von Daten, die bei der Abarbeitung des Programms erforderlich sind. Dabei kann es sich beispielsweise um biometrische Informationen und Berechtigungsinformationen handeln.

Die Kommunikationsschnittstelle 74 umfasst zum Beispiel eine oder mehrere Schnittstellen zur Kommunikation der Benutzervorrichtung mit zumindest einer weiteren Vorrichtung (z.B. mit dem Backend-Server 120 als Teil des in Fig. 1 dargestellten Systems 1). Die Kommunikationsschnittstelle 74 kann insbesondere so eingerichtet sein, dass sie gemäß einem zellularen Mobilfunksystem wie einem 2G/3G/4G/5G oder zukünftigen zellularen Mobilfunksystem kommuniziert Des Weiteren kann die Kommunikationsschnittstelle 74 zusätzlich eine BLE- und/oder Bluetooth-Funkschnittstelle mit einem BLE-Sender und/oder - Empfänger umfassen. Beispielsweise kann die Funkschnittstelle 74 zusätzlich oder alternativ eine WLAN-Funkschnittstelle mit mindestens einem WLAN-Sender und/oder -Empfänger umfassen.

Die Bildaufnahmevorrichtung 75 kann durch eine Kamera der Benutzervorrichtung 7 gegeben sein, zum Beispiel durch eine rückseitige Kamera eines Smartphones als Benutzervorrichtung 7. Die Bildaufnahmevorrichtung 75 kann beispielsweise auch zugleich ein im Folgenden beschriebener biometrischer Sensor 76 der Benutzervorrichtung 7 sein.

Der zumindest eine biometrische Sensor 76 kann vielfältig ausgestaltet sein. Der biometrische Sensor 76 kann durch eine Kamera (z.B. eine Kamera, die zugleich als Bildaufnahmevorrichtung 75 dient) gegeben sein, wobei die Kamera beispielsweise Bilder eines Gesichts aus verschiedenen Winkeln und Distanzen erfasst Des Weiteren kann eine Kamera (z.B. eine Infrarotkamera) als biometrischer Sensor 76 eine dreidimensionale Form eines Gesichts erfassen, beispielsweise indem zunächst ein Punktmuster auf das Gesicht projiziert wird und die Kamera anschließend das reflektierte Punktmuster erfasst Der biometrische Sensor 76 kann weiterhin durch einen Fingerabdrucksensor gegeben sein (welcher z.B. einen oder mehrere Bildsensoren, kapazitive Sensoren, thermische Sensoren und/oder Drucksensoren umfasst). Der biometrische Sensor 76 kann weiterhin durch ein Mikrofon gegeben sein, wobei das Mikrofon beispielsweise eine gesprochene Stimme erfasst und die erfassten Audiosignale mittels Audioverarbeitung analysiert werden, um charakteristische Stimmmerkmale wie Tonhöhe oder Frequenzmuster zu bestimmen.

Die Benutzervorrichtung 7 kann eine beliebige Anzahl an unterschiedlichen biometrischen Sensoren 76 aufweisen, die unterschiedlich an der Benutzervorrichtung 7 angeordnet sein können.

Die Benutzerschnittstelle 77 kann als Bildschirm und Tastatur oder als berührungsempfindliche Anzeige (Touchscreen) ausgestaltet sein und beispielsweise einem Benutzer der Benutzervorrichtung 7 die Bedienung der Benutzervorrichtung ermöglichen.

Fig. 8 zeigt eine schematische Darstellung einer beispielhaften Ausführungsform einer Steuereinheit 8 einer Fachanlage (z.B. der in Fig. 1 dargestellten Fachanlage 130 oder der in Fig. 5 dargestellten Fachanlage 5) gemäß dem zweiten Aspekt der vorliegenden Offenbarung.

Die Steuereinheit 8 umfasst einen Prozessor 80, einen Programmspeicher 81, einen Arbeitsspeicher 82, einen Nutzdatenspeicher 83, eine Kommunikationsschnittelle 84, eine Ansteuerungseinheit 85 für die Schlösser oder Schlosssteuereinheiten der Fächer der Fachanlage, zumindest einen biometrischen Sensor 86 und eine optionale Eingabeeinheit/Benutzerschnittstelle 87. Der Prozessor 80 führt beispielsweise ein Programm gemäß dem zweiten Aspekt der vorliegenden Offenbarung aus, das in dem Programmspeicher 81 gespeichert ist, beispielsweise als Firmware. Arbeitsspeicher 82 dient insbesondere der Speicherung temporärer Daten während des Ablaufs dieses Programms.

Der Nutzdatenspeicher 83 dient der Speicherung von Daten, die bei der Abarbeitung des Programms erforderlich sind. Vorliegend kann es sich dabei beispielsweise um Informationen handeln, die von der Steuereinheit 8 verwendet werden können, um festzustellen, ob eine biometrische Information zur Abholung einer Sendung aus der Fachanlage berechtigt. Weitere Daten wie beispielsweise Versandinformationen können beispielsweise im Nutzdatenspeicher 83 gespeichert werden, zum Beispiel in Datenstrukturen, die eine Zuordnung von eingelagerten Sendungen, Berechtigungsinformationen und/oder jeweiligen Fächern der Fachanlage repräsentieren.

Die Kommunikationsschnittstelle 84 umfasst beispielsweise eine Schnittstelle zur drahtlosen Kommunikation, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID. Die Steuereinheit 8 ist beispielsweise ferner zur direkten Kommunikation mit einem Backend-Server (z.B. dem in Fig. 1 gezeigten Backend-Server 120) eingerichtet, sie verfügt also beispielsweise über eine Kommunikationsschnittstelle, die einen Zugang zum Internet oder zu einem anderen Netz, an das der Backend-Server angeschlossen ist, ermöglicht.

Die Ansteuerungseinheit 85 der Steuereinheit 8 einer Fachanlage ermöglicht es, ein einzelnes Fach der Fachanlage gezielt zu öffnen oder zu entriegeln, um die Öffnung zu ermöglichen, insbesondere durch Ansteuerung des Schlosses des Fachs oder eine Schlosssteuereinheit des Fachs. Zusätzlich kann eine Verriegelung eines jeweiligen Fachs bewirkt werden. Die Ansteuerungseinheit 85 ist beispielsweise über eine jeweilige Verdrahtung mit allen Schlössern oder Schlosssteuereinheiten der Fachanlage verbunden oder an einen Bus angeschlossen, an dem auch alle Schlösser oder Schlosssteuereinheiten der Fachanlage angebunden sind.

Der zumindest eine biometrische Sensor 86 kann vielfältig ausgestaltet sein. Der biometrische Sensor 86 kann durch eine mit der Steuereinheit 8 verbundenen Kamera der Fachanlage gegeben sein, wobei die Kamera beispielsweise Bilder eines Gesichts aus verschiedenen Winkeln und Distanzen erfasst Des Weiteren kann eine Kamera (z.B. eine Infrarotkamera) als biometrischer Sensor 86 eine dreidimensionale Form eines Gesichts erfassen, beispielsweise indem zunächst ein Punktmuster auf das Gesicht projiziert wird und die Kamera anschließend das reflektierte Punktmuster erfasst Der biometrische Sensor 86 kann weiterhin durch einen Fingerabdrucksensor der Steuereinheit 8 gegeben sein (welcher z.B. einen oder mehrere Bildsensoren, kapazitive Sensoren, thermische Sensoren und/oder Drucksensoren umfasst). Der biometrische Sensor 86 kann weiterhin durch ein Mikrofon der Steuereinheit 8 gegeben sein, wobei das Mikrofon beispielsweise eine gesprochene Stimme erfasst und die erfassten Audiosignale mittels Audioverarbeitung analysiert werden, um charakteristische Stimmmerkmale wie Tonhöhe oder Frequenzmuster zu bestimmen.

Die Steuereinheit 8 einer Fachanlage kann eine beliebige Anzahl an unterschiedlichen biometrischen Sensoren 86 aufweisen, die unterschiedlich an der Fachanlage angeordnet sein können. Beispielsweise ist eine Kamera als biometrischer Sensor 86 derart an der Fachanlage angeordnet, dass sie das Gesicht einer Person, die die Fachanlage benutzt, erfassen kann. Ein Fingerabdrucksensor als biometrischer Sensor 86 ist beispielsweise an der Vorderseite der Fachanlage angeordnet, sodass er für eine Person, die die Fachanlage benutzt, leicht zugänglich ist.

Die Eingabeeinheit/Benutzerschnittstelle 87 ist optional und zur Kommunikation mit einem Zusteller/Lieferanten und/oder einem Benutzer eingerichtet Dies kann beispielsweise eine Ausgabeeinheit zum Anzeigen (z.B. über einen Bildschirm oder über fachspezifische Leuchtanzeigen) oder zum akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) umfassen.

Darüber hinaus kann die Steuereinheit 8 eine Erfassungseinheit wie beispielsweise einen Scanner aufweisen, welcher optisch Informationen erfassen kann (z.B. einen Bar- oder QR-Code von einem Bildschirm eines Mobilgeräts). In einem weiteren Beispiel ist eine Erfassungseinheit der Steuereinheit dazu eingerichtet, NFC-Tags zu lesen, die beispielsweise an einer jeweiligen Sendung befestigt und oder in diese eingelegt sind. Die Erfassungseinheit kann zusätzlich oder alternativ in der Lage sein, akustische Signale zu erfassen und zu verarbeiten (z.B. mittels Spracherkennung).

Fig. 9 zeigt eine schematische Darstellung einer beispielhaften Ausführungsform eines Backend-Servers 9 gemäß dem zweiten oder dritten Aspekt der vorliegenden Offenbarung. Bei dem Backend-Server 9 kann es sich beispielsweise um einen Fachanlagenverwaltungsserver handeln.

Der Backend-Server 9 umfasst einen Prozessor 90, einen Programmspeicher 91, einen Arbeitsspeicher 92, einen optionalen Nutzdatenspeicher 93 sowie zumindest eine Kommunikationsschnittelle 94. Der Prozessor führt beispielsweise ein Programm gemäß dem zweiten Aspekt der vorliegenden Offenbarung aus, das in dem Programmspeicher 91 gespeichert ist, beispielsweise als Firmware. Arbeitsspeicher 92 dient insbesondere der Speicherung temporärer Daten während des Ablaufs dieses Programms.

Der Nutzdatenspeicher 93 dient der Speicherung von Daten, die bei der Abarbeitung des Programms erforderlich sind. Vorliegend kann es sich dabei beispielsweise um Informationen handeln, die von dem Backend-Server 9 verwendet werden können, um festzustellen, ob eine biometrische Information zur Abholung einer Sendung aus der Fachanlage berechtigt. Weitere Daten wie beispielsweise Versandinformationen können beispielsweise im Nutzdatenspeicher 93 gespeichert werden, zum Beispiel in Datenstrukturen, die eine Zuordnung von eingelagerten Sendungen, Berechtigungsinformationen und/oder jeweiligen Fächern einer Fachanlage repräsentieren. Weiterhin kann es sich z.B. um Benutzerkennungen, Benutzerkontaktdaten, wie E-Mail-Adressen und Mobilfunknummern, Fachanlagenkennungen und Sendungsdaten handeln. Alle Daten können beispielsweise verschlüsselt gespeichert sein. Im Nutzdatenspeicher 93 können zudem Informationen über eine Vielzahl von Fachanlagen gespeichert sein.

Die zumindest eine Kommunikationsschnittstelle 94 kann eine Schnittstelle zur Kommunikation mit einer Steuereinheit einer Fachanlage (z.B. der in Fig. 1 dargestellten Steuereinheit 131 der Fachanlage 130) oder einem Mobilgerät (z.B. dem in Fig. 1 dargestellten Smartphone 110 des Benutzers 140) eingerichtet sein. Diese Kommunikation kann beispielsweise auf dem Internet Protocol (IP) basieren. Beispielsweise ist dazu die zumindest eine Kommunikationsschnittstelle 94 als Local Area Network (LAN) Schnittstelle ausgeführt

In den Ausführungsbeispielen der Figuren 7 bis 9 kann der Prozessor 70, 80 oder 90 beispielsweise jeweils eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASICs) oder ein Field Programmable Gate Array (FPGAs) sein. Der Programmspeicher und/oder der Nutzdatenspeicher kann in den Ausführungsbeispielen der Figuren 7 bis 9 beispielsweise ein persistenter Speicher, wie beispielsweise ein Read-Only-Memory (ROM)-Speicher sein. Der Programmspeicher kann beispielsweise fest mit dem jeweiligen Prozessor 70, 80 oder 90 verbunden sein, kann aber alternativ auch lösbar mit dem jeweiligen Prozessor 70, 80 oder 90 verbunden sein, beispielsweise als Speicherkarte, Diskette oder optisches Datenträgermedium (z.B. eine CD oder DVD). Der Arbeitsspeicher der Ausführungsbeispiele der Figuren 7 bis 9 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

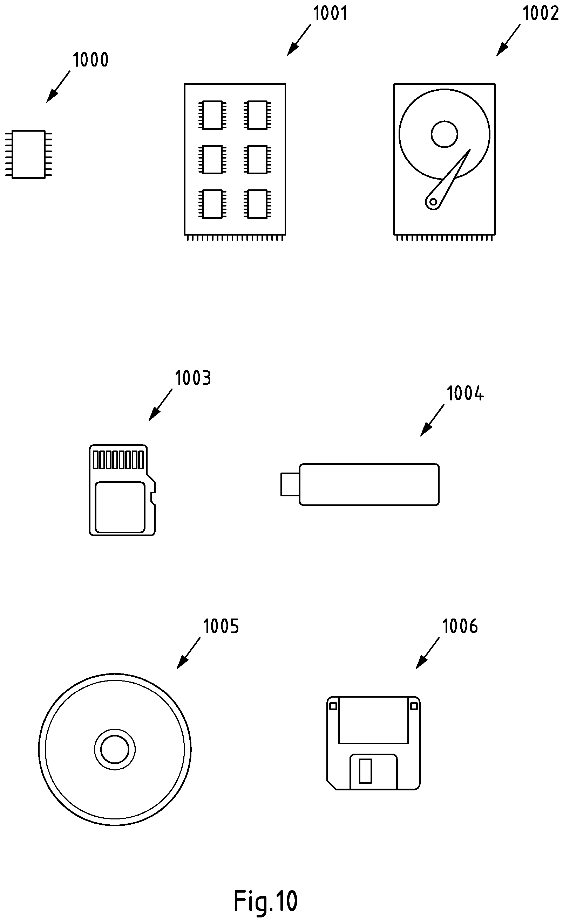

Fig. 10 zeigt beispielhafte Ausführungsformen von Speichermedien, auf denen zum Beispiel ein Computerprogramm gemäß den verschiedenen Aspekten der vorliegenden Offenbarung gespeichert sein kann. Das Speichermedium kann beispielsweise ein magnetisches, elektrisches, optisches und/oder andersartiges Speichermedium sein. Das Speichermedium kann beispielsweise Teil eines Prozessors sein, beispielsweise ein (nicht-flüchtiger oder flüchtiger) Programmspeicher des Prozessors oder ein Teil davon. Ausführungsbeispiele eines Speichermediums sind ein Flash Speicher 1000, eine SSD-Festplatte 1001, eine magnetische Festplatte 1002, eine Speicherkarte 1003, ein Memory Stick 1004 (z.B. ein USB-Stick), eine CD-ROM oder DVD 1005 oder eine Diskette 1006.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall 'teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsbeispiele werden als Teil der vorliegenden Offenbarung offenbart:

### Ausführungsbeispiel 1:

Ein Verfahren, wobei das Verfahren umfasst:
- Erhalten einer Berechtigungsinformation, wobei die Berechtigungsinformation zur Abholung einer Sendung aus einer Fachanlage berechtigt;
- Erhalten einer biometrischen Information, wobei die biometrische Information zumindest ein biometrisches Merkmal einer Person repräsentiert;
- Bestimmen, zumindest teilweise basierend auf der Berechtigungsinformation und der biometrischen Information, einer Berechtigungsanzeigeinformation, wobei die Berechtigungsanzeigeinformation anzeigt, dass die biometrische Information zur Abholung der Sendung aus der Fachanlage berechtigt; und
- Bereitstellen der Berechtigungsanzeigeinformation und der biometrischen Information.

### Ausführungsbeispiel 2:

Das Verfahren gemäß Ausführungsbeispiel 1, wobei die Berechtigungsinformation durch einen Abholcode repräsentiert wird.

### Ausführungsbeispiel 3:

Das Verfahren gemäß Ausführungsbeispiel 1 oder Ausführungsbeispiel 2, wobei das Erhalten der Berechtigungsinformation umfasst:
- Empfangen der Berechtigungsinformation von einem Backend-Server; oder
- Bewirken eines Erfassens der Berechtigungsinformation mittels einer Bildaufnahmevorrichtung einer Benutzervorrichtung.

### Ausführungsbeispiel 4:

Das Verfahren gemäß einem der Ausführungsbeispiel 1 bis 3, wobei das Erhalten der biometrischen Information umfasst:
- Bewirken eines Erfassens des zumindest einen von der biometrischen Information repräsentierten biometrischen Merkmals mit einem oder mehreren biometrischen Sensoren der Benutzervorrichtung.

### Ausführungsbeispiel 5:

Das Verfahren gemäß einem der Ausführungsbeispiele 1 bis 3, wobei das Erhalten der biometrischen Information umfasst:
- Anfragen der biometrischen Information an einer weiteren Benutzervorrichtung;
- Empfangen der angefragten biometrischen Information von der weiteren Benutzervorrichtung.

### Ausführungsbeispiel 6:

Das Verfahren gemäß einem der Ausführungsbeispiel 1 bis 5, wobei das Bereitstellen der Berechtigungsanzeigeinformation und der biometrischen Information umfasst:
- Übertragen der biometrischen Information und der Berechtigungsanzeigeinformation an einen Backend-Server.

### Ausführungsbeispiel 7:

Ein Verfahren umfassend:
- Erhalten einer biometrischen Information, wobei die biometrische Information zumindest ein biometrisches Merkmal einer Person repräsentiert;
- Bestimmen, ob die biometrische Information zur Abholung einer Sendung berechtigt; und
- wenn bestimmt wird, dass die biometrische Information zur Abholung einer Sendung berechtigt, Bewirken eines Öffnens eines Fachs einer Fachanlage, in welchem die Sendung eingelagert ist

### Ausführungsbeispiel 8:

Das Verfahren gemäß Ausführungsbeispiel 7, wobei das Erhalten der biometrischen Information umfasst:
- Bewirken eines Erfassens des zumindest einen von der biometrischen Information repräsentierten biometrischen Merkmals mit einem oder mehreren biometrischen Sensoren der Fachanlage.

### Ausführungsbeispiel 9:

Das Verfahren gemäß Ausführungsbeispiel 7 oder Ausführungsbeispiel 8, wobei das Bestimmen, ob die biometrische Information zur Abholung einer Sendung berechtigt, umfasst:
- Ermitteln, ob eine Berechtigungsanzeigeinformation vorliegt, welche anzeigt, dass die erhaltene biometrische Information zur Abholung einer Sendung berechtigt

### Ausführungsbeispiel 10:

Das Verfahren gemäß einem der Ausführungsbeispiele 7 bis 9, wobei das Bewirken des Öffnens des Fachs umfasst:
- Bestimmen, zumindest teilweise auf der vorliegenden Berechtigungsanzeigeinformation, des Fachs der Fachanlage, in welchem die Sendung, zu deren Abholung die biometrische Information berechtigt, eingelagert ist

### Ausführungsbeispiel 11:

Ein Verfahren, wobei das Verfahren umfasst:
- Bereitstellen einer Berechtigungsinformation, wobei die Berechtigungsinformation zur Abholung einer Sendung aus einer Fachanlage berechtigt;
- Erhalten einer Berechtigungsanzeigeinformation und einer biometrischen Information, wobei die Berechtigungsanzeigeinformation vor dem Erhalten zumindest teilweise basierend auf der Berechtigungsinformation und der biometrischen Information bestimmt wird, und wobei die Berechtigungsinformation anzeigt, dass die biometrische Information zur Abholung der Sendung aus der Fachanlage berechtigt; und
- Bereitstellen der Berechtigungsanzeigeinformation und der biometrischen Information.

### Ausführungsbeispiel 12:

Das Verfahren gemäß Ausführungsbeispiel 11, wobei das Bereitstellen einer Berechtigungsinformation das Übertragen der Berechtigungsinformation an eine Benutzervorrichtung umfasst, wobei das Erhalten einer Berechtigungsanzeigeinformation und einer biometrischen Information ein Empfangen der Berechtigungsanzeigeinformation und der biometrischen Information von der Benutzervorrichtung umfasst, und wobei das Bereitstellen der Berechtigungsanzeigeinformation und der biometrischen Information ein Übertragen der Berechtigungsanzeigeinformation und der biometrischen Information an eine Steuereinheit einer Fachanlage umfasst

### Ausführungsbeispiel 13:

Das Verfahren gemäß einem der Ausführungsbeispiele 1 bis 12, wobei das zumindest eine biometrische Merkmal der Person ein Gesichtsmerkmal der Person ist.

### Ausführungsbeispiel 14:

Ein Computerprogramm, umfassend Programmanweisungen, die einen Prozessor zur Ausführung und/oder Steuerung des Verfahrens gemäß einem der Ausführungsbeispiele 1 bis 13 veranlassen, wenn das Computerprogramm auf dem Prozessor läuft

### Ausführungsbeispiel 15:

Eine Benutzervorrichtung, eingerichtet zur Ausführung und/oder Steuern des Verfahrens gemäß einem der Ausführungsbeispiele 1 bis 6 und 13 oder umfassend Mittel zur Ausführung und/oder Steuerung der Schritte des Verfahrens gemäß einem der Ausführungsbeispiele 1 bis 6 und 13.

### Ausführungsbeispiel 16:

Eine Vorrichtung, eingerichtet zur Ausführung und/oder Steuern des Verfahrens gemäß einem der Ausführungsformen 7 bis 10 und 13 oder umfassend Mittel zur Ausführung und/oder Steuerung der Schritte des Verfahrens gemäß einem der Ausführungsformen 7 bis 10 und 13.

### Ausführungsbeispiel 17:

Ein Backend-Server, eingerichtet zur Ausführung und/oder Steuern des Verfahrens gemäß einem der Ausführungsformen 11 bis 13 oder umfassend Mittel zur Ausführung und/oder Steuerung der Schritte des Verfahrens gemäß einem der Ausführungsbeispiele 11 bis 13.

### Ausführungsbeispiel 18:

Ein System umfassend die Benutzervorrichtung gemäß Ausführungsbeispiel 15, die Vorrichtung gemäß Ausführungsbeispiel 16 und den Backend-Server gemäß Ausführungsbeispiel 17.

## Patentansprüche

1. Ein Verfahren (200), wobei das Verfahren umfasst:
- Erhalten (201) einer Berechtigungsinformation, wobei die Berechtigungsinformation zur Abholung einer Sendung (550) aus einer Fachanlage (130;5) berechtigt;
- Erhalten (202) einer biometrischen Information, wobei die biometrische Information zumindest ein biometrisches Merkmal einer Person (140,335) repräsentiert;
- Bestimmen (203), zumindest teilweise basierend auf der Berechtigungsinformation und der biometrischen Information, einer Berechtigungsanzeigeinformation, wobei die Berechtigungsanzeigeinformation anzeigt, dass die biometrische Information zur Abholung der Sendung (550) aus der Fachanlage (130;5) berechtigt; und
- Bereitstellen (204) der Berechtigungsanzeigeinformation und der biometrischen Information.

2. Das Verfahren (200) gemäß Anspruch 1, wobei die Berechtigungsinformation durch einen Abholcode (315; 3 30) repräsentiert wird.

3. Das Verfahren (200) gemäß Anspruch 1 oder Anspruch 2, wobei das Erhalten (201) der Berechtigungsinformation umfasst:
- Empfangen der Berechtigungsinformation von einem Backend-Server (120); oder
- Bewirken eines Erfassens der Berechtigungsinformation mittels einer Bildaufnahmevorrichtung (325) einer Benutzervorrichtung (110;310).

4. Das Verfahren (200) gemäß einem der Ansprüche 1 bis 3, wobei das Erhalten (202) der biometrischen Information umfasst:
- Bewirken eines Erfassens des zumindest einen von der biometrischen Information repräsentierten biometrischen Merkmals mit einem oder mehreren biometrischen Sensoren (320) der Benutzervorrichtung (110;310); oder
- Anfragen der biometrischen Information an einer weiteren Benutzervorrichtung (350) und Empfangen der angefragten biometrischen Information von der weiteren Benutzervorrichtung (350).

5. Das Verfahren (200) gemäß einem der Ansprüche 1 bis 4, wobei das Bereitstellen (204) der Berechtigungsanzeigeinformation und der biometrischen Information umfasst:
- Übertragen der biometrischen Information und der Berechtigungsanzeigeinformation an einen Backend-Server (120).

6. Ein Verfahren (400) umfassend:
- Erhalten (401) einer biometrischen Information, wobei die biometrische Information zumindest ein biometrisches Merkmal einer Person (540) repräsentiert;
- Bestimmen (402), ob die biometrische Information zur Abholung einer Sendung (550) berechtigt; und
- wenn bestimmt wird, dass die biometrische Information zur Abholung einer Sendung (550) berechtigt, Bewirken eines Öffnens (403) eines Fachs einer Fachanlage (130;5), in welchem die Sendung (550) eingelagert ist

7. Das Verfahren (400) gemäß Anspruch 6, wobei das Erhalten (401) der biometrischen Information umfasst:
- Bewirken eines Erfassens des zumindest einen von der biometrischen Information repräsentierten biometrischen Merkmals mit einem oder mehreren biometrischen Sensoren (530) der Fachanlage (5);
und/oder wobei das Bestimmen (402), ob die biometrische Information zur Abholung einer Sendung (550) berechtigt, umfasst:
- Ermitteln, ob eine Berechtigungsanzeigeinformation vorliegt, welche anzeigt, dass die erhaltene biometrische Information zur Abholung einer Sendung (550) berechtigt

8. Das Verfahren (400) gemäß einem der Ansprüche 6 und 7, wobei das Bewirken des Öffnens (403) des Fachs umfasst:
- Bestimmen, zumindest teilweise auf der vorliegenden Berechtigungsanzeigeinformation, des Fachs der Fachanlage (5), in welchem die Sendung (550), zu deren Abholung die biometrische Information berechtigt, eingelagert ist

9. Ein Verfahren (600), wobei das Verfahren umfasst:
- Bereitstellen (601) einer Berechtigungsinformation, wobei die Berechtigungsinformation zur Abholung einer Sendung (550) aus einer Fachanlage (130;5) berechtigt;
- Erhalten (602) einer Berechtigungsanzeigeinformation und einer biometrischen Information, wobei die Berechtigungsanzeigeinformation vor dem Erhalten zumindest teilweise basierend auf der Berechtigungsinformation und der biometrischen Information bestimmt wird, und wobei die Berechtigungsinformation anzeigt, dass die biometrische Information zur Abholung der Sendung (550) aus der Fachanlage (130;5) berechtigt; und
- Bereitstellen (603) der Berechtigungsanzeigeinformation und der biometrischen Information.

10. Das Verfahren (600) gemäß Anspruch 9, wobei das Bereitstellen (601) einer Berechtigungsinformation das Übertragen der Berechtigungsinformation an eine Benutzervorrichtung (110;310) umfasst, wobei das Erhalten (602) einer Berechtigungsanzeigeinformation und einer biometrischen Information ein Empfangen der Berechtigungsanzeigeinformation und der biometrischen Information von der Benutzervorrichtung (130;310) umfasst, und wobei das Bereitstellen (603) der Berechtigungsanzeigeinformation und der biometrischen Information ein Übertragen der Berechtigungsanzeigeinformation und der biometrischen Information an eine Steuereinheit (131;510) einer Fachanlage (130;5) umfasst

11. Ein Computerprogramm, umfassend Programmanweisungen, die einen Prozessor (70;80;90) zur Ausführung und/oder Steuerung des Verfahrens (200;400;600) gemäß einem der Ansprüche 1 bis 10 veranlassen, wenn das Computerprogramm auf dem Prozessor (70;80;90) läuft

12. Eine Benutzervorrichtung (110;310;7), eingerichtet zur Ausführung und/oder Steuern des Verfahrens (200) gemäß einem der Ansprüche 1 bis 5 oder umfassend Mittel (71-77) zur Ausführung und/oder Steuerung der Schritte des Verfahrens (200) gemäß einem der Ansprüche 1 bis 5.

13. Eine Vorrichtung (120;130;510;8;9), eingerichtet zur Ausführung und/oder Steuern des Verfahrens (400) gemäß einem der Ansprüche 6 bis 8 oder umfassend Mittel (81-87;91-94) zur Ausführung und/oder Steuerung der Schritte des Verfahrens (400) gemäß einem der Ansprüche 6 bis 8.

14. Ein Backend-Server (120;9), eingerichtet zur Ausführung und/oder Steuern des Verfahrens (600) gemäß einem der Ansprüche 9 und 10 oder umfassend Mittel (91-94) zur Ausführung und/oder Steuerung der Schritte des Verfahrens (600) gemäß einem der Ansprüche 9 und 10.

15. Ein System (1) umfassend die Benutzervorrichtung (110;310;7) gemäß Anspruch 12, die Vorrichtung (120;130;510;8;9) gemäß Anspruch 13 und den Backend-Server (120;9) gemäß Anspruch 14.
